# EUROPEAN PATENT SPECIFICATION

(11) **EP 3 548 289 B1**
(45) Date of publication and mention of the grant of the patent: **21.07.2021**
(21) Application number: 17905301.2
(22) Date of filing: 14.04.2017
(51) Int. Cl.: G06K 15/10, B41J 2/045, B41J 2/155, B41J 2/175

(54) **FLUID EJECTION MASK DATA SELECTION**
AUSWAHL VON FLÜSSIGKEITSAUSSTOSSMASKENDATEN
SÉLECTION DE DONNÉES DE MASQUE D'ÉJECTION DE FLUIDE

(43) Date of publication of application: 09.10.2019
(73) Proprietor: Hewlett-Packard Development Company, L.P., Spring TX 77389 (US)
(72) Inventor: MARTIN, Eric T, Corvallis Oregon 97330 (US); ANDERSON, Daryl E, Corvallis Oregon 97330 (US)
(74) Representative: Liesegang, Eva
(86) International application number: PCT/US2017/027637
(87) International publication number: WO 2018/190866

(56) References cited:
- EP-A2- 0 803 360
- WO-A1-03/055200
- WO-A1-2014/037040
- WO-A1-2015/022018
- WO-A1-2015/163903
- WO-A1-2015/178900
- WO-A1-2016/015766
- US-B1- 6 257 698
- US-B2- 7 374 274
- US-B2- 8 356 871
- US-B2- 9 199 489

## Description

### BACKGROUND

Fluidic ejection systems may control movement and ejection of fluid into or onto a fluid recipient. The fluid ejection system may eject or deposit fluid differently in different regions of the fluid recipient. One example fluid ejection system may be in the form of a printer that ejects ink onto a fluid recipient in the form of a print medium. One example fluid ejection system may be in the form of an additive manufacturing system that forms three-dimensional objects through the ejection of fluid.

US 6 257 698 B1 which is regarded as closest prior art describes method of printing on a print medium with an ink jet printing mechanism having a print head with at least two nozzle arrays. The method comprising steps of printing with the nozzle arrays in a first printing mode, the first printing mode comprising the at least two nozzle arrays printing during a pass of the print head relative to the print medium, a second one of the nozzle arrays printing with a first density masking such that a portion of nozzles of the second nozzle array are prevented from printing during the pass; and switching to printing in a second printing mode when a subsequent pass of the print head relative to the print medium does not require printing from the first nozzle array, the second printing mode comprising the second nozzle array printing without the first density masking during the subsequent pass.

WO 2016 / 015 766 A1 describes method of printing a pattern from at least two rows of fluid ejection nozzles, said nozzles ejecting a first fluid in a multi-pass printing mode, the method comprising: dividing the pattern to be printed between the rows of fluid ejection nozzles; applying masks to the rows of fluid ejection nozzles for printing with selected nozzles of each of the rows of fluid ejection nozzles during each pass; wherein a first mask for printing from a first row of fluid ejection nozzles during an n-th pass is different from a second mask for printing from a second row of fluid ejection nozzles during said n-th pass.

WO 2015 / 178 900 A1 describes swath height error compensation. Some examples may determine a density of an image to be printed in an overlap area of a printing material. The overlap area may include target pixels capable of being printed by a first set of drop ejection elements and a second set of drop ejection elements that are redundant to the first set of drop ejection elements. Some implementations may also determine a mask to apply to the first and second set of drop ejection elements based on the determined density, and the mask may designate at least one additional drop to apply to at least one target pixel in the overlap area by at least one of the first and second set of drop ejection elements. Some implementations may also apply the mask to the first set of drop ejection elements and the second set of drop ejection elements.

### BRIEF DESCRIPTION OF THE DRAWINGS

The drawings show various examples of embodiments of this invention.
Figure 1 is a block diagram schematically illustrating some components of a fluid ejection system.
Figure 2 is a block diagram schematically illustrating some components of another fluid ejection system.
Figure 3 is a diagram schematically illustrating an actuation event of the fluid ejection system of Figure 2 using a first set of mask data identifying a first primitive size.
Figure 4 is a diagram schematically illustrating an actuation event of the fluid ejection system of Figure 2 using a second set of mask data identifying a second primitive size.
Figure 5 is a flow diagram of a method for enabling differently sized subsets of fluid actuators during different actuation events according to an example of the invention.
Figure 6 is a block diagram schematically illustrates some components of another fluid ejection system.
Figure 7 is a block diagram schematically illustrating some components of one example of the fluid ejection system of Figure 6 during a set of actuation events.
Figure 8 is a flow diagram of a method for actuating subsets of fluid actuators during a set of actuation events.
Figure 9 is a schematic diagram illustrating the actuation of fluid actuators of the fluid ejection system of Figure 7 during the set of actuation events.
Figure 10 is a block diagram schematically illustrating some components of another fluid ejection system.
Figures 11A, 11B, 11C and 11D are schematic diagrams of a mask register of the fluid ejection system of Figure 10 storing sets of actuation data and mask data, respectively, illustrating one set of actuation events and shifting of the set of mask data for each of the actuation events of the set.
Figure 12 is a flow diagram of a method for actuating fluid actuators during a set of actuation events.
Figure 13 is a block diagram schematically illustrating some components of another fluid ejection system.

### DETAILED DESCRIPTION OF EXAMPLES OF THE INVENTION

Fluid ejection systems comprise a fluidic die having fluid actuators. The fluid actuators may include a piezoelectric membrane based actuator, a thermal resistor based actuator, an electrostatic membrane actuator, a mechanical/impact driven membrane actuator, a magneto-strictive drive actuator, or other such elements that may cause displacement and controlled ejection of fluid responsive to electrical actuation. Fluidic ejection systems described herein may comprise a plurality of fluid actuators, which may be referred to as an array of fluid actuators.

In example fluidic dies, the array of fluid actuators may be arranged in respective sets of fluid actuators, where each such set of fluid actuators may be referred to as a "primitive" or a "firing primitive." A primitive generally comprises a group of fluid actuators that each have a unique actuation address. A number of fluid ejectors corresponding to a respective primitive may be referred to as a size of the primitive. Primitives facilitate addressing and subsequent actuation of fluid ejector subsets that may be concurrently actuated for a given actuation event. An actuation event, as used herein, may refer to concurrent actuation of fluid actuators of a fluidic die to thereby cause fluid displacement such as fluid circulation or fluid ejection. A set of actuation events, as used herein, may refer to a number of the actuation events which results in each fluid actuator of each primitive being enabled at some time during the set of actuation events.

To illustrate by way of example, if a fluidic die comprises four primitives, where each respective primitive comprises eight respective fluid actuators (each eight fluid actuator group having an address 0 to 7), and one fluid actuator is enabled per primitive, a total of four fluid actuators may be concurrently actuated for a given actuation event. For example, for a first actuation event, the respective fluid actuator of each primitive having an address of 0 may be actuated. For a second actuation event, the respective fluid actuator of each primitive having an address of 1 may be actuated. For each fluid actuator of each primitive to be enabled at some time during a set of actuation events, eight actuation events would make up the set of actuation events. As will be appreciated, the example is provided merely for illustration purposes. Fluidic dies contemplated herein may comprise more or less fluid actuators per primitive and more or less primitives per die.

The size of the primitive and the corresponding number of primitives of an array may limit the total number of fluid actuators that may be possibly actuated across a fluidic die during a given actuation event, assisting in satisfying fluid and electrical constraints of the fluidic die and the fluid ejection system. At the same time, the size of each primitive and the corresponding number of primitives may also impact the speed or rate at which fluid is ejected onto different regions. Fewer fluid actuators or addresses per primitive enables fast ejection speeds because of the fewer number of actuation events to fire all of the fluid actuators. However, fewer fluid actuators or addresses per primitive means more primitives. The more primitives per nozzle column array, the more nozzles that are enabled and that could be actuated simultaneously, which may result in power constraints on the fluid ejection system being violated. In many systems, the number of fluid actuators or addresses per primitive is fixed based upon the maximum ejection density and maximum energy demands allowed for a given fluid ejection system.

In many such systems, the number of fluid actuators or addresses per primitive and the corresponding speed for completing a document or job is based on a worst-case region of the document. In other words, the primitive is fixed at a size such that power constraints of the fluid ejection system will not be violated when printing high density regions, such as a region including images. Although well-suited for printing high density regions or images of a document, the fixed primitive size may result in unduly slow printing in lower density regions of a document, such as portions of a document including text.

The number of fluid actuators or addresses per primitive is changed or selected "on-the-fly". In one implementation, the number of fluid actuators or addresses per primitive is changed region by region. The different regions may be different regions in a single document, different regions along a continuous web or different regions of an additive manufacturing build bed. In another implementation, the different regions may be located on different documents or on different ejection tasks or print jobs. In one implementation, the number of different regions may comprise different collections of individual fluid recipients, such as different regions of fluid testing locations/spots, vials, channels or other regions which may receive ejected fluid.

The number of fluid actuators or addresses per primitive may be changed from one region to another based upon the overall actuation characteristics of each region. By modulating or changing the number of fluid actuators or addresses per primitive in response to different fluid actuation characteristics of different regions, different ejection or print speeds for different regions may be provided while still respecting fluidic and power constraints of the system. By providing different ejection or print speeds for different regions, overall ejection efficiency may be enhanced.

In examples described herein, a fluidic die may comprise an actuation data register and a mask register. The actuation data register may store actuation data that indicates each fluid actuator to actuate for a set of actuation events. The mask register may store mask data that indicates a subset of fluid actuators of the array of fluid actuators enabled for actuation for a respective actuation event of the set of actuation events. Therefore, it may be appreciated that the invention facilitates concurrent actuation of different arrangements of fluid actuators based on the mask data of the mask register. The mask data group fluid actuators in primitives, where the primitives may be identified via the mask data. Accordingly, the invention facilitates variable primitive size. For example, for a first set of actuation events, fluid actuators may be arranged in primitives of a first primitive size, as defined by first mask data stored in the mask register, and for a second set of actuation events, second mask data may be loaded into the mask register such that fluid actuators may be arranged in primitives of a second primitive size.

In some examples described herein, the mask data that is stored in the mask register may be generated on the fluidic die itself, potentially reducing consumption of transmission bandwidth and increasing speed. In the described examples, mask data generation circuitry located on the fluidic die builds a set of mask data from building blocks or subsets of mask data, wherein each of the subsets has a pattern based upon a received pattern selection input. In one implementation, the subsets of mask data forming the set of mask data have the same repeating pattern of mask data. In other implementations, the subsets of mask data may have distinct individual patterns of mask data.

In some examples described herein, the fluidic die may comprise multiple sets of mask registers. Each mask register stores a set of mask data having a mask data bit or storage element for each of the fluid actuators in an array. Each set of mask data is for a single actuation event. Each set of mask registers is for use during a set of actuation events, wherein each fluid actuator of each primitive is enabled at some time during the set of actuation events. Sequencing logic may be used to select in sequence between the mask data sets in the set of mask registers during a set of actuation events.

In some examples, a fluid actuator may be disposed in a nozzle, where the nozzle may comprise a fluid chamber and a nozzle orifice in addition to the fluid actuator. The fluid actuator may be actuated such that displacement of fluid in the fluid chamber may cause ejection of a fluid drop via the nozzle orifice. Accordingly, a fluid actuator disposed in a nozzle may be referred to as a fluid ejector.

Some example fluidic dies comprise microfluidic channels. Microfluidic channels may be formed by performing etching, microfabrication (e.g., photolithography), micromachining processes, or any combination thereof in a substrate of the fluidic die. Some example substrates may include silicon based substrates, glass based substrates, gallium arsenide based substrates, and/or other such suitable types of substrates for microfabricated devices and structures. Accordingly, microfluidic channels, chambers, orifices, and/or other such features may be defined by surfaces fabricated in the substrate of a fluidic die. Furthermore, as used herein a microfluidic channel may correspond to a channel of sufficiently small size (e.g., of nanometer sized scale, micrometer sized scale, millimeter sized scale, etc.) to facilitate conveyance of small volumes of fluid (e.g., picoliter scale, nanoliter scale, microliter scale, milliliter scale, etc.). Example fluidic dies described herein may comprise microfluidic channels in which fluidic actuators may be disposed. In such implementations, actuation of a fluid actuator disposed in a microfluidic channel may generate fluid displacement in the microfluidic channel. Accordingly, a fluid actuator disposed in a microfluidic channel may be referred to as a fluid pump.

The fluid ejection system of the invention includes an actuation controller that selects a first set of mask data for enabling fluid actuators with respect to a first region and a second set of mask data for enabling fluid actuators with respect to a second region. Different "regions" may be in the form of different portions of a same sheet or document, different pages of multiple pages, different portions of a web, different regions of a build bed or different build beds of an additive manufacturing system, or different independent print jobs or fluid ejection projects/tasks carried out by the fluid ejection system. In such implementations, the actuation controller may select or change between different sets of mask data corresponding to different primitive sizes on-the-fly during the ejection on a single document or single web, between the ejection of fluid on different pages (after one pages been completed and before the next page has begun) or between different ejection tasks (after one ejection task or print job as completed and for the next ejection task or print job has begun). The first set of mask data indicates a first subset of the total number of fluid actuators of an array, the first subset having a first number of fluid actuators enabled for actuation for a respective actuation event of a first set of actuation events. The second set of mask data indicates a second subset of the total number of fluid actuators of an array, the second subset having a second number of fluid actuators, different than the first number of fluid actuators, enabled for actuation for a respective actuation event of a second set of actuation events.

The method of the invention selects a first set of mask data for enabling fluid actuators with respect to a first region of a fluid recipient and select a second set of mask data for enabling fluid actuators with respect to a second region of the fluid recipient. The first set of mask data indicates a first number of fluid actuators of an array of fluid actuators enabled for actuation for a respective actuation event of a first set of actuation events being carried out with respect to the first region while the second set of mask data indicates a second number of fluid actuators of the array of fluid actuators, different than the first number of fluid actuators of the array, enabled for actuation for a respective actuation event of a second set of actuation events being carried out with respect to the second region. The method transmits the selection of the first set of mask data and the selection of the second set of mask data to actuation logic to enable the first set of fluid actuators for the respective actuation event of the first set of actuation events and the second set of fluid actuators for the respective actuation event of the second set of actuation events, respectively.

A non-transitory computer-readable medium of the invention contains instructions for directing a processor. The instructions direct the processor to determine a first fluid actuation characteristic for a first region of a fluid recipient and determine a second fluid characteristic for a second region of the fluid recipient. The instruction further direct the processor to select a first set of mask data for enabling fluid actuators for a respective actuation event of a set of actuation events being carried out respect to the first region of a fluid recipient and a second set of mask data for enabling fluid actuators for a respective actuation event of a set of actuation events being carried out with respect to the second region of the fluid recipient. The first set of mask data and the second set of mask data is selected based upon the determined first fluid actuation characteristic and the second fluid actuation characteristic, respectively. The first set of mask data indicates a first number of fluid actuators of an array of fluid actuators enabled for actuation for a respective actuation event of a first set of actuation events. The second set of mask data indicates a second number of fluid actuators of the array of fluid actuators enabled for actuation for a respective actuation event of a second set of actuation events. The instructions direct the processor to further transmit the selection of the first set of mask data and the selection of the second set of mask data to actuation logic to enable the first set of fluid actuators for the respective actuation event of the first set of actuation events and the second set of fluid actuators for the respective actuation event of the second set of actuation events, respectively.

Disclosed herein are various examples where the selection of different sets of mask data for different regions of a fluid recipient, such as a print medium, are based upon at least one actuation characteristic for fluid actuator actuations in the different regions. For example, the selection of different sets of mask data may be based upon different fluid actuator actuation densities in the first and second regions. A fluid actuator actuation density may refer to the percentage of the fluid actuators that are selected for actuation during a set of actuation events when carrying out printing or ejection tasks with respect to a particular region. For example, when ejecting fluid in a first region, the first total number of fluid actuators may be fired or actuated during each set of actuation events. In contrast, when ejecting fluid in a second region, a second total number of fluid actuators, different than the first number, may be fired or actuated during each set of actuation events. In some implementations, the number of fluid actuators in an array or column that are to be fired during a set of actuation events is indicated by actuation data in actuation data register. Accordingly, the selection of the set of mask data and the associated primitive size for a given region may be based upon the number of fluid actuators selected for actuation during a set of actuation events in the actuation data register for the given region. In contrast, the size of the primitive may dictate which of those fluid actuators to be fired during the set of actuation events are fired by each actuation event of the set.

In another example, selection of different sets of mask data may be based upon different fluid compositions of the fluid to be deposited the first and second regions, such as the particular types of fluid or colors of fluid or their relative distributions in the different regions. According to the invention, as specified in the claims, selection of different sets of mask data is based upon different power profiles for the first region and the second region. For example, due to differences in fluid actuator actuation density, the fluid to be ejected or the like, different regions may consume different amounts of energy. The selection of different sets of mask data also may be based upon a combination of different power profiles with other actuation characteristic differences.

Additionally, the selection of different sets of mask data may also be based upon the type of actuators being actuated during an event. For example, a first set of mask data may be selected where the majority of the fluid actuators to be actuated during an event with respect to a first region consume a lower amount of energy, such as fluid pumps. A second set of mask data, having a larger primitive size, may be selected where the majority of the fluid actuators to be actuated during an event with respect to a second region consume higher amounts of energy, such as fluid ejectors.

Different sets of mask data identifying differently sized primitives for use with respect to carrying out a task on different regions may be selected based upon the different fluid drop weights that are used in the different regions. For example, a set of mask data identifying a larger primitive size may be selected when carrying out an ejection task with respect to a region having a high drop weight where more than one actuator is fired or actuated in each primitive. By customizing the sets of mask data to different regions of the fluid recipient based upon the actuation characteristics in such regions, overall print speeds for the print recipient may be enhanced while remaining within the electrical and fluidic constraints of the ejection system.

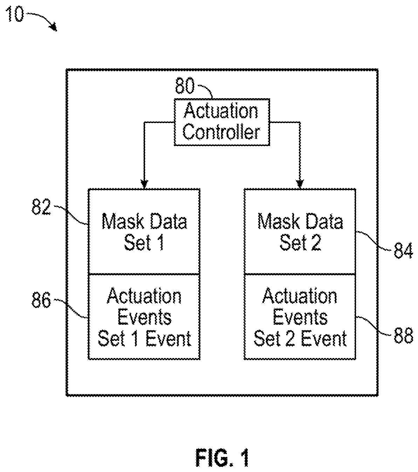

Figure 1 is a block diagram schematically illustrating some components of an example fluid ejection system 10. Fluid ejection system 10 comprises an actuation controller 80. Actuation controller 80 may comprise a processing unit, other electronics or electronic hardware/circuitry that controls the selection of mask data for controlling what subsets of fluid actuators of an array are actuated during individual actuation events of a set of actuation events. The processing unit may follow instructions contained or stored in a non-transitory computer-readable medium.

As schematically illustrated by Figure 1, actuation controller 80 selects a first set 82 of mask data for enabling fluid actuators for a first actuation event being carried out with respect to a first region of a fluid recipient and selects a second set 84 of mask data for enabling fluid actuators during the second actuation event being carried out with respect to a second region of the fluid recipient. The first set 82 of mask data indicates a first subset having a first number of fluid actuators of an array of fluid actuators that are to be enabled for actuation for an actuation event of the set 86 of actuation events. The second set 84 of mask data indicates a second subset having a second number, different than the first number, of fluid actuators of the array of fluid actuators that are to be enabled for an actuation event of the set 88 of actuation events. In one implementation, the different number of fluid actuators enabled by the first and second sets of mask data correspond to differently sized primitives. Each set 86, 88 of actuation events may include a number of actuation events corresponding to a different number of primitives to be used when ejecting fluid in the different regions of the fluid recipient each set 86, 88 of actuation events. Each set 86, 88 of actuation events may include a number of actuation events corresponding to the number of fluid actuators in the respective primitive being used during the ejection of fluid during the individual set 86, 88 of actuation events.

Actuation controller 80 facilitates the customization of fluid ejection on different regions of a fluid recipient based upon the different characteristics of the different regions. Actuation controller 80 may select different sets 82, 84 of mask data indicating different primitive sizes for the different regions of the print recipient based upon characteristics of the different regions. Such selection of the different sets 82, 84 of mask data indicating different primitive sizes may be based upon actuation characteristics such as fluid actuator actuation density, the different compositions or distribution of the fluid itself being ejected in the different regions and/or different energy consumption profiles of the different regions. For example, actuation controller 80 may select a first set of mask data indicating a larger primitive size, wherein a fewer number of fluid actuators or fluid ejectors are concurrently enabled for actuation during an actuation event of a set for a region having a high fluid actuator actuation density, for a region to receive a type of fluid that consumes a large amount of energy and/or for region having a large energy consumption profile. The fewer number of fluid actuators being enabled for actuation during each actuation event corresponds to a larger number of actuation events in the set such that each fluid actuator is enabled at some time during the set. The larger number of actuation events corresponds to a larger total time to eject fluid into or onto the first region.

Actuation controller 80 may select a second set of mask data indicating a smaller primitive size, wherein a larger number of fluid actuators or fluid ejectors are concurrently enabled for actuation during respective actuation events of a set for a region having a low fluid actuator actuation density, for region to receive a type of fluid that consumes a less amount of energy and/or for a region having a low energy consumption profile. The larger number of fluid actuators being enabled for actuation during each actuation event corresponds to a smaller number of actuation events in the set such that each fluid actuator is enabled at some time during the set. The smaller number of actuation events corresponds to a smaller total time to eject fluid into or onto the first region.

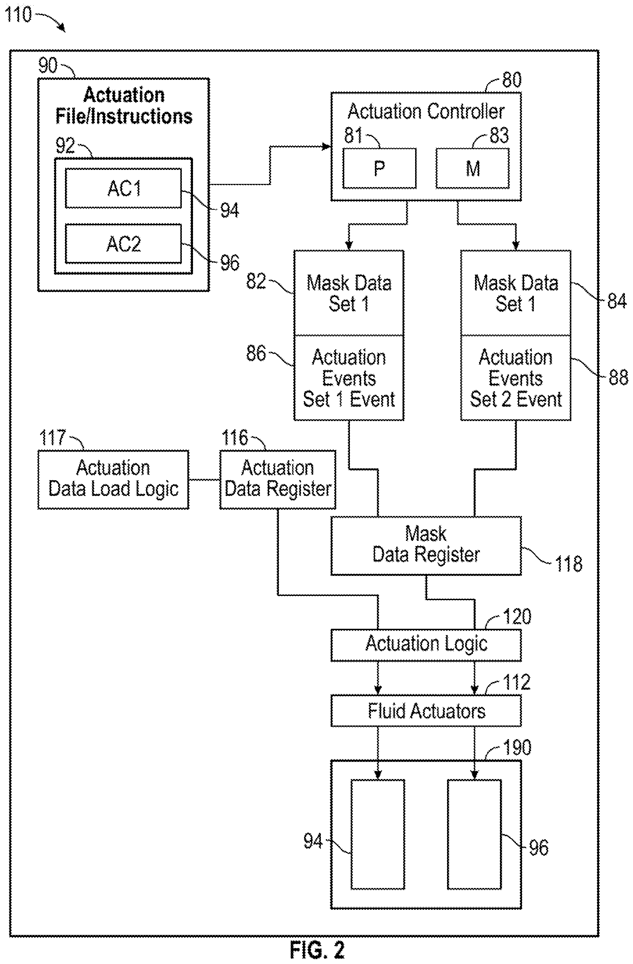

Figure 2 is a block diagram schematically illustrating some components of another example fluid ejection system 110. Fluid ejection system 110 is to eject fluid over different regions of a fluid recipient, wherein different sets of mask data corresponding to different fluid actuator primitive sizes are used when ejecting fluid into or onto the different regions of the fluid recipient. In one implementation, fluid ejection system 110 may be in the form of a printer that ejects ink or other fluid onto a print medium, such as a sheet or a web. In another implementation, fluid ejector system 110 may be in the form of an additive manufacturing system which ejects fluid in different regions of a build bed. Fluid ejection system 110 comprises fluid actuators 112, actuation data register 116, actuation data load logic 117, mask register 118, actuation logic 120 and actuation controller 80 (described above).

Fluid actuators 112 comprise devices or elements that cause displacement of a fluid in response to electrical actuation. The fluid actuators 112 may include a piezoelectric membrane based actuator, a thermal resistor based actuator, an electrostatic membrane actuator, a mechanical/impact driven membrane actuator, a magneto-strictive drive actuator, or other such elements. In one implementation, each fluid actuators 112 are in the form of fluid ejectors which may be part of nozzles. In some implementations, fluid actuators 112 comprise a mixture of different types of fluid actuators in the form of both pumps and ejectors.

In the example illustrated, fluid actuators 112 are in an array. In one implementation, the array comprises a row or column of such fluid actuators. In another implementation, the array may comprise fluid actuators 12 having other layouts or arrangements.

Actuation data register 116 comprises a memory data register that may store actuation data that indicates each fluid actuator to actuate for a set of actuation events. Actuation data load logic 117 comprises electronic hardware circuitry and logic elements that load actuation data register 118 with actuation data. The actuation data may indicate the number of fluid actuators that are to be actuated or fired at some time during a set of actuation events. The actuation data may correspond to fluid actuator actuation density. The actuation data in combination with the current set of mask data in mask register 118 indicates which fluid actuators 112 are to be actuated during the respective actuation event of a set of actuation events.

Mask register 118 comprises a memory data register that may store a set mask data for an individual actuation events of a set of actuation events. The set of mask data in mask register 118 indicates a set of fluid actuators of the array enabled for actuation for a respective actuation event of the set of actuation events. In one implementation, the actuation data register 116 comprises the number of bits or data storage locations corresponding to each of the fluid actuators 112 of the array. In such an implementation, mask register 118 comprises a number of bits or data storage locations corresponding to each of the fluid actuators 112 of the array.

Actuation logic 120 comprises logic circuitry such as processing hardware and/or software, coupled to actuation data register 16, mask register 118 and fluid actuators 112. Actuation logic 120 is to electrically actuate a subset of fluid actuators 112 based at least in part upon actuation data residing in actuation data register 116 and mask data residing in mask register 118 for an individual actuation event of a set or larger series of actuation events.

As in system 10, actuation controller 80 facilitates the customization of fluid ejection on different regions of a fluid recipient based upon the different characteristics of the different regions. Actuation controller 80 may select different sets 82, 84 of mask data having different sized primitives for enabling fluid actuators with respect to the different regions of the print recipient based upon characteristics of the different regions. Such selection of the different sets 82, 84 of mask data and their associated different number of enabled fluid actuators during an actuation event may be based upon actuation characteristics such as fluid actuator actuation density, the different compositions or distribution of the fluid itself being ejected in the different regions and/or different energy consumption profiles of the different regions.

As further schematically illustrated by Figure 2, actuation controller 80 may receive an actuation file or actuation instructions 90 for an ejection recipient 92, such as a sheet of print media, portions of a continuous web of print media, an additive manufacturing build bed or various other fluid recipients such as an array of vials, test pads or the like. The actuation instructions 90 may identify a pattern or image to be formed by a fluid or combinations of fluids ejected by fluid actuators 112. The actuation instructions may call for a first region 94 having first actuation characteristics and a second region 96 having second actuation characteristics different than the first actuation characteristics. An actuation characteristic is a characteristic associated with how many fluid actuators are to be actuated during a set of actuation events, the type or color of fluid to be displaced, the type of actuators being fired or actuated (pumps or ejectors) or the energy demands or energy consumption profiles associated with the displacement of fluid to achieve the called for pattern or image.

Such characteristics may differ from one another. For example, one of regions 94, 96 may have text with a lower fluid actuator actuation density while the other of regions 94, 96 may have an image with a higher fluid actuator actuation density. One of regions 94, 96 may have a higher relative proportion or percentage of a first fluid that may demand higher energy to eject as compared to other fluids, such as black ink, while the other of regions 94, 96 has a lower relative portion or percentage of the first fluid, such as black ink. One of regions 94, 96 may call for the same or a similar number of fluid actuators to be actuated for each associated set of actuation events, but where one region calls for a greater number or percentage of fluid actuators serving as fluid ejectors to be fired during a set of actuation events carried out while the other region calls for a greater number percentage of fluid actuators serving as fluid pumps to be fired during a set of actuation events.

Actuation controller 80 may analyze the actuation file/instructions 92 identify the different actuation characteristics AC1 and AC2 of regions 94 and 96 on fluid recipient 92. In the example illustrated, actuation controller 80 may comprise a processing unit 31 and a non-transitory computer-readable medium in the form of memory 83. Memory 83 contains instructions for directing processing unit 31 to carry out the analysis of actuation file/instructions 92. Based upon the determined differences in the characteristics, actuation controller 80 may select differently sized primitives for use when actuating actuators in the different regions 94 and 96. To select differently size primitives, actuation controller 80 selects different sets of mask data for controlling what subset of fluid actuators are enabled for actuation during each actuation event of a set of actuation events.

For example, controller 80 may select first sets of mask data for use when actuating actuators when displacing fluid so as to circulate the fluid to provide fluid for ejection onto region 94 or when displacing fluid through a nozzle so as to eject the fluid onto region 94, wherein each of the sets enable a first number of fluid actuators per actuation event. Controller 80 may select a second set of mask data for use when ejecting fluid on region 96, wherein the second set of mask data enables a second number, different than the first number, of fluid actuators per actuation event.

In one scenario, actuation controller 80 may evaluate the called for fluid actuation actuator density associated with each of regions 94, 96. In such an implementation, actuation controller 80 may compare the identified fluid actuator actuation density of each of regions 94, 96 to a predefined stored threshold. Actuation data in actuation data register 118 controls or determines what fluid actuators will be fired during a set of actuation events. The mask data in a mask register 116 controls which of those fluid actuators that are to be fired during the set of actuation events are actuated or fired in an individual actuation event of the set. For a fluid actuator to be actuated or fired, the fluid actuator must be enabled in both the actuation data register and the mask register. A region of higher density ejections may have a greater number of actuators also enabled in the actuation data register, whereas a region of lower density ejections may have a fewer number of actuators also enabled in the actuation data register. A region of higher density ejections may fire or actuate a larger number or larger percentage of the fluid actuators enabled in accordance with the mask data. A region of lower density ejections may actually fire or actuate a smaller number or smaller percentage of the fluid actuators enabled in accordance with the same mask data. In other words, even though the same number of fluid actuators may be enabled pursuant to the same set of mask data, the actual number of fluid actuators that are actuated or fired may be greater for a high density ejection region as compared to a lower density ejection region.

In response to determining that the fluid actuator actuation density of region 94 is above the predefined threshold, such as where region 94 may comprise graphics, photos or other images, actuation controller 80 may select a first set of mask data corresponding to a larger primitive size, wherein a fewer number of fluid actuators are concurrently enabled during respective actuation events of a set. The fewer number of fluid actuators being enabled for concurrent actuation during each actuation event corresponds to a larger number of actuation events in the set such that each fluid actuator is enabled at some time during the set. The larger number of actuation events corresponds to a larger total time to eject fluid into or onto the first region. The use of such a larger primitive size during the ejection of fluid in region 94 may result in system 110 staying within power constraints of system 110.

By way of contrast, in response to determining that the fluid actuator actuation density of region 96 is below the predefined threshold, such as where region 96 has more text, actuation controller 80 may select a second set of mask data corresponding to a smaller primitive size, wherein a larger number of fluid actuators or fluid ejectors of the array are enabled for concurrent actuation during respective actuation events of a set. The larger number of fluid actuators being enabled for concurrent actuation during each actuation event corresponds to a smaller number of actuation events in the set such that each fluid actuator is enabled at some time during the set. The smaller number of actuation events corresponds to a smaller total time to eject fluid into or onto the second region. Use of such a smaller primitive size during the ejection of fluid in region 96 may result in system 110 completing the document or job in less time.

As further shown by Figure 2, mask data set 82 may be selected for an actuation event that is part of the set of actuation events 86 when ejecting fluid onto region 94 of document 190. Mask data set 84 may be selected for an actuation event that is part of the set of actuation events 88 when ejecting fluid onto region 96 of document 190. Because different sizes of primitives are utilized when ejecting fluid onto the different regions of the fluid recipient, document 190, printing or ejection job completion time is reduced while remaining within the power constraints of system 110.

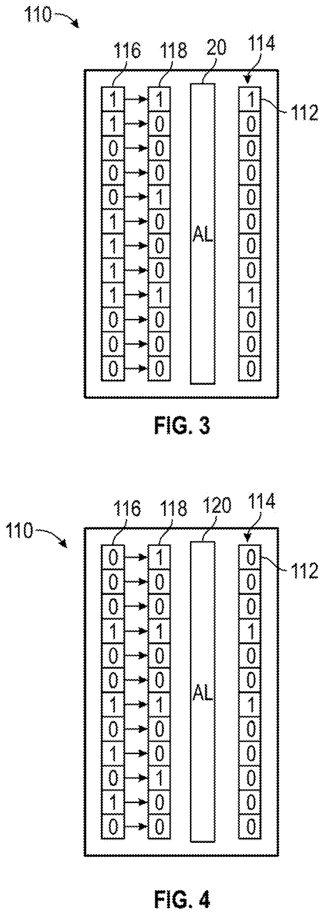

Figures 3 and 4 are schematic diagrams illustrating two example sets of mask data loaded into mask register 118 for use during an actuation event of two different sets of actuation events when ejecting fluid in two different regions. Figure 3 illustrate an example where the actuation instructions 90 (shown in Figure 2) call for a first number of fluid actuators (six fluid actuators in the example) to be actuated or fired at some time during the set of actuation events to be carried out with respect to a first region. As a result, actuation data register 116 has six bits with a "1" value corresponding to those fluid actuators to be fired at some time during the set of actuation events. By way of contrast, Figure 4 illustrate an example where actuation instructions 90 (shown in Figure 2) call for a second number of fluid actuators, less than the first number of fluid actuators (4 fluid actuators in the example) to be actuated or fired at some time during the set of actuation events to be carried out with respect to a second different region. As a result, actuation data register 116 has four bits with a "1" and correspond to the four fluid actuators to be fired are actuated sometime during the set of actuation events to be carried out with respect to the second region. In the example illustrated, the first region may be said to have a higher fluid actuator actuation density as compared to the second region. It should be appreciated that depending upon the pattern or layout of fluid droplets to be ejected, actuation data 116 may be populated with various combinations of "1" and "0"s, selecting various combination of different fluid actuators for actuation during a set of actuation events.

Figures 3 and 4 further illustrate an example of actuation controller 80 selecting different sets of mask data for enabling fluid actuators for a respective actuation event of sets of actuation events that are to be carried out with respect to the first and second regions, respectively. Based upon the higher fluid actuator actuation density identified with respect to the first region, actuation controller 80 has selected a set of mask data identifying a larger size primitive for the actuation event to be carried out spec to the first region. In one implementation, actuation controller 80 may identify fluid actuator actuation densities of the two different regions by analyzing actuation instructions 90 which provide instructions for loading actuation data register 116 for different sets of actuation events to be carried out in the different regions. The instructions may indicate the number of fluid actuators to be actuated in a set of actuation events for each of the first and second regions. The larger the number of fluid actuators to be actuated and a set of actuation events, the greater the fluid actuator actuation density.

In one implementation, actuation controller 90 may evaluate fluid actuator actuation density by randomly selecting a set of actuation events in each of the different regions to analyze and upon which to base the selection of the set of mask data. In another implementation, actuation controller 90 may evaluate multiple sets of actuation events from across different portions of each of the different regions and base the selection of a set of mask data upon the number of fluid actuators to be actuated during the multiple sets of actuation events. In one implementation, the multiple sets of actuation events may be randomly taken from different portions of the each of the regions. In another implementation, the multiple sets of actuation events analyzed to determine fluid actuator actuation density may be taken from uniformly spaced locations across each of the regions. In each case, actuation controller 80 may compare the determined fluid actuator actuation density against various predefined thresholds to determine which of many available sets of mask data selected. The resolution at which different regions are analyzed (the size of the different regions) and the values of the thresholds against which the determined fluid actuator actuation densities are compared to potentially trigger a particular set of mask data may vary to vary the frequency at which different sets of mask data are selected for the different regions.

Figure 3 illustrates an example wherein actuation controller 80 has instructed the population of mask register 118 with a set of mask data corresponding to a primitive size of four fluid actuators. During each actuation event, one out of every four fluid actuators in the array is enabled for possible actuation depending upon the corresponding values in actuation data register 116. As shown by Figure 3, the selected set of mass data in mask register 118 results in actuation logic 20 firing or actuating two fluid actuators during the example actuation event illustrated.

By way of contrast, Figure 4 illustrates an example where actuation controller 80 has instructed the population of mask register 118 with a set of mask data corresponding to a primitive size of three fluid actuators. During each actuation event, one out of every three fluid actuators in the array is enabled for possible actuation depending upon the corresponding values in actuation data register 116. As shown by Figure 3, selected set of mask data in register 118 results in actuation logic 120 also firing or actuating to fluid actuators during the example actuation event illustrated. Thus, despite the different fluid actuator actuation densities called for in the first and second regions, the total number of fluid actuators actually fired are actuated during an actuation event is the same. As a result, fluid and power constraints of the system may not be violated as a result of the higher fluid actuator actuation density in the first region. At the same time, because actuation controller 80 has selected a set of mask data identifying a smaller primitive size, the total number of actuation events in the set of actuation events being carried out in the second region is smaller, potentially reducing the overall time to complete the second set of actuation events being carried out in the second region. As a result, ejection speed or efficiency may be enhanced.

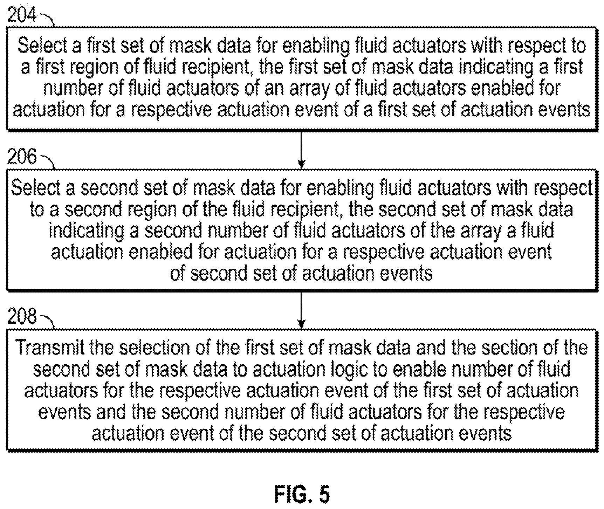

Figure 5 is a flow diagram of an example method 200 for enabling different numbers of fluid actuators for actuation events of different sets of fluid actuations when ejecting fluid on different regions of a fluid recipient. As discussed above, different "regions" of a fluid recipient may be in the form of different portions of a same sheet or document, different pages of multiple pages, different portions of a web or different portions of independent print jobs, different regions of a build bed of an additive manufacturing system, different build beds of an additive manufacturing system or different fluid ejection projects/tasks carried out by the fluid ejection system. In such implementations, the actuation controller may select or change between different sets of mask data corresponding to different primitive sizes on-the-fly during the ejection on a single document, single web, between the ejection of fluid on different pages (after one pages been completed and before the next page has begun) or between different ejection tasks (after one ejection task or print job as completed and for the next ejection task or print job has begun). Although method 200 is described as being carried out by system 110, it should be appreciated that method 200 may be carried out by any of the fluid ejection systems described in the disclosure or similar fluid ejection systems.

As indicated by block 204, actuation controller 80 selects a first set of mask data for the enablement of fluid actuators with respect to a first region of a fluid recipient. The first set of mask data indicates a first number of fluid actuators of an array of fluid actuators enabled for actuation for a respective actuation event of a first set of actuation events. The first number of fluid actuators may correspond to the first primitive size having the first number of fluid actuators.

As indicated by block 206, actuation controller 80 selects a second set of mask data for enablement of fluid actuators with respect to a second region of the fluid recipient. The second set of mask data indicates a second number of fluid actuators, different than the first number of fluid actuators, of the array of fluid actuators enabled for actuation for a respective actuation events of a second set of actuation events. The second number of fluid actuators may correspond to a second primitive size having the second number of fluid actuators.

In one implementation, the selection of the first set of mask data in the second set of mask data may be based upon different actuation characteristics of the first region and the second region. In one implementation, the selection of different sets of mask data may be based upon different ejection densities in the first and second regions. In another implementation, selection a different sets of mask data may be based upon different fluid compositions in the first and second regions, such as the particular types of fluid or colors of fluid or their relative distributions in the different regions. According to the invention, selection of different sets of mask data are based upon different power profiles for the first region and the second region. For example, due to differences in fluid actuator actuation density, the fluid to be ejected, fluid drop weights, or actuator types (ejector vs pump), different regions may consume different amounts of energy. In some implementations, the selection of different sets of mask data may be based upon a combination of such feature differences or other actuation characteristic differences. By customizing the sets of mask data for different regions of the fluid recipient based upon the actuation characteristics in such regions, overall printing or fluid ejection speeds for the fluid recipient may be enhanced while remaining within the electrical and fluidic constraints of the ejection system.

As indicated by block 208, actuation controller 80 transmits a selection of the first set of mask data and the selection of the second set of mask data to actuation logic 120 to enable the first number of fluid actuators for the respective actuation event of the first set of actuation events and the second number of fluid actuators for the respective actuation event of the second set of actuation events. In one implementation, the selected set of mask data is loaded into a mask register connected to the actuation logic, wherein the set of mask data is shifted for each actuation event of the set. In one implementation, a fluidic die may comprise multiple mask registers with each mask register storing a different set of mask data, wherein a selected one of the multiple mask registers having the selected set of mask data is connected to actuation logic 120 and wherein the selected mask register is shifted for each actuation event of the set. In another implementation, actuation controller 80 selects the set of mask data by selecting a subset or a pattern of mask data which is repeatedly loaded into the mask register to form the full selected set of mask data, wherein the set of mask data formed in the mask register is shifted for each actuation event of the set. In one implementation, actuation controller 80 selects a set of mask data by selecting a subset or pattern of mask data which is repeatedly loaded into the mask register to form the full selected set of mask data, wherein the mask register is loaded in a similar fashion for each actuation event of the set. In one implementation, the selected set of mask data is stored in a mask register of a larger set of mask registers, wherein each of the mask registers of the larger set of mask registers are selected and sequenced during the set of actuation events.

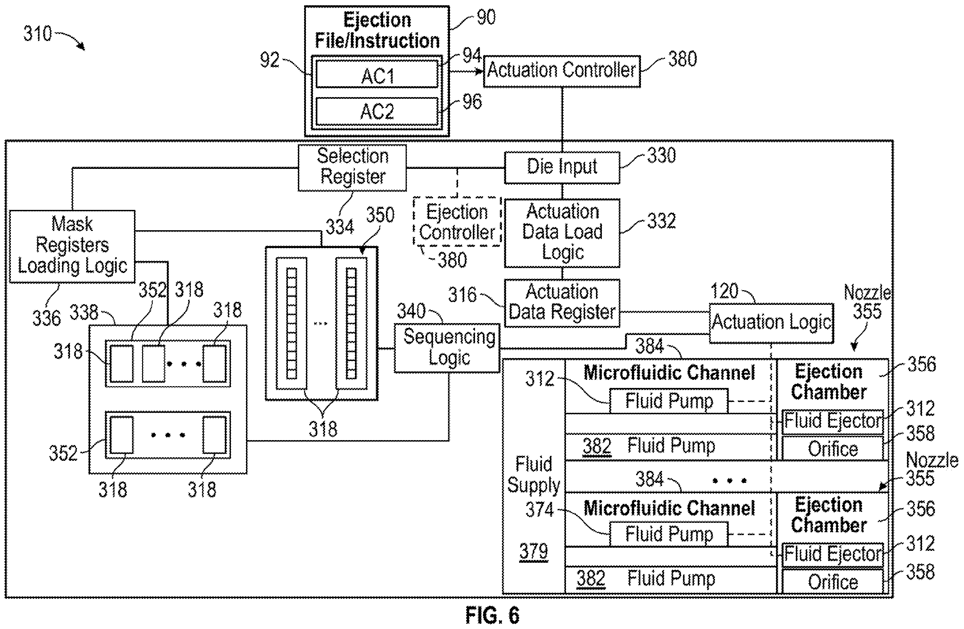

Figure 6 is a block diagram schematically illustrating some components of another example fluid ejection system 310. In system 310, the selected set of mask data is stored in a mask register of a larger set of mask registers, wherein each of the mask registers of the larger set of mask registers is selected for one actuation event of the set of actuation events. System 310 comprises fluid actuators 312, actuation data register 316, mask registers 318, die input 330, actuation data load logic 332, selection register 334, mask registers loading logic 336, mask register set storage 338, sequencing logic 340 sequencing logic 322, actuation logic 320 and actuation controller 380.

Each fluid actuator 312 is similar to fluid actuators 12 described above. As further shown by Figure 6, some of fluid actuators 312 are each part of a nozzle 355 having an ejection chamber 356 having an orifice 358 and in which the fluid ejector 312 is located. Each ejection chamber 356 is fluidly connected to fluid supply 379 by a fluid input 382 and a microfluidic channel 384. In the example illustrated, each fluid input 382 and microfluidic channel 384 facilitate circulation of fluid into ejection chamber 356, through and across ejection chamber 356 and out of ejection chamber 356 back to fluid supply 379. In the example illustrated, such circulation is facilitated by fluid pump 374 within microfluidic channel 384. In some implementations, a single fluid pump 312 may circulate fluid with respect at least two ejection chambers associated with at least two nozzles.

In one implementation, fluid supply 379 comprises an elongate slot supplying fluid to each of the fluid ejectors 354 of the array of fluid ejectors that are actuated based upon the actuation data contained in actuation data register 316 and the mask data contained in mask register 318. In another implementation, fluid supply 379 may comprise an array of ink feed holes. In one implementation, fluid supply 379 further supplies fluid to fluid actuator 312 serving as fluid ejectors and actuator 312 serving as fluid pumps located on an opposite side of fluid supply 379.

Actuation data register 316 is similar to actuation data register 116 described above. As shown, actuation data load logic 332 may be coupled to the actuation data register 316 to control the loading of actuation data into actuation data register 316 for a series or set of actuation events.

Mask registers 318 each comprise a memory data register to store a set of mask data, wherein the set of mask data has a mask data element for each fluid actuator 312. Mask registers 318 are grouped into a set 350 of mask registers. Set 350 is formed by a number of mask registers 318 of at least the minimum number of possible actuation events for a set of actuation events, wherein the number of actuation events in a set of actuation events corresponds to the number of fluid actuators in each primitive. In other words, the number of mask registers 318 in set 350 corresponds to the maximum number of fluid actuators that may be chosen for a primitive.

In one implementation, each mask register 318 of the set 350 stores a single pattern of mask data, wherein the single pattern is shifted in each mask register of the set relative to the same pattern of mask data in the other mask registers 318 of the set 350. As a result, cycling through all of the mask registers 318 of set 350 during a set of actuation events resulting each fluid actuator of each primitive and each actuator of the array being enabled at some time during the set of actuation events. In other implementations, some mask registers 318 of set 350 may store altered patterns of mask data that are different from the patterns of mask data in the other mask registers 318 of set 350.

Die input 330 comprises a connection by which instructions for fluid displacement may be received by die 310. In one input, die input 330 comprises an electrical contact pad. In other implementations, die input 330 may comprise other electrical signal receiving structures.

Actuation data load logic 332 comprises logic circuitry such as processing hardware and/or software, coupled to actuation data register 316 to load actuation data register 316 with actuation data received by die input 330. Mask data set(s) registers 334 comprises a memory data register coupled to die input 330 to temporarily store a selection of mask data sets for at least one set of actuation events. In one implementation, a selection of mask data sets and the actuation data may be transmitted in a single packet or in the header of a single packet, wherein die 310 additionally comprises a parser or other logic to distinguish and separate the actuation data from the input pertaining to the selected set of mask data. In one implementation, mask data sets register 334 stores an identification of a set of mask registers to be utilized for a set of actuation events.

Mask registers loading logic 336 loads the mask registers 318 of set 350 with sets of mask data for being selected and sequenced through during a set of actuation events. Loading of the set 350 of mask registers 318 may take place during periods in which die 310 is inactive. Mask registers loading logic 336 may load less than all of the available registers 318 of set 350 depending upon the number of actuation events in the set of actuation events which is dependent upon the size of the primitive and number of primitive sizes. For example, set 350 may comprise eight registers, facilitating up to eight actuation events in a set of actuation events which correspond to a primitive size of eight fluid actuators. In instances where a set of actuation events is to have four fluid actuators per primitive (as indicated by the input stored in register 334), mask registers loading logic 336 may populate four of the eight available registers for the set of actuation events.

As shown by Figure 6, in some implementations, system 310 may comprise additional sets 352 of mask registers 318, each of sets 352 comprising mask registers that store sets of mask data for being selected and sequenced during a set of actuation events. For example, in one implementation, system 310 may comprise a first set of mask registers that store first sets of mask data for a first primitive size, a second set 352 of mask registers that store second sets of mask data for a second primitive size, different than the first primitive size and a third set 352 of mask registers that store sets of mask data for a third primitive size, different than the first primitive size and different than the second primitive size, for being selected and sequenced during a third set of actuation events.

In such an implementation, in response to die 310 receiving a primitive size selection corresponding to one of the sets 352 of registers 318, logic 336 may temporarily disconnect set 350 from sequencing logic 340 and connect the set 352 having selected primitive size to sequencing logic 340. The provision of additional sets 352 of mask registers 318 having preloaded sets of mask data for different primitive sizes may reduce the time consumed by the loading of sets of mask data into registers 318 of set 350 when the primitive size is being changed.

Sequencing logic 340 is coupled to set 350 of mask registers 318. As described above, in some circumstances, sequencing logic 340 may alternatively be coupled to a selected one of sets 352 of mask registers 318. Sequencing logic 340 operates in a fashion similar to that of sequencing logic 40 described above. Sequencing logic 340 comprises logic circuitry that selects and sequences different sets of mask data for individual actuation events of a set or series of actuation events. After each actuation event, sequencing logic 340 selects another mask register 318 in the set 350, 352 for the next actuation event of the set of actuation events. As described above, in one implementation, the sets of mask data in the set 350, 352 are selected and sequenced by sequencing logic 340 such that each fluid actuator of each primitive or each fluid actuator of the array is enabled at some time during the set of actuation events.

Actuation controller 380 is similar to actuation controller 80 described above. Actuation controller 380 facilitates the customization of fluid actuator actuations with respect to different regions of a fluid recipient based upon the different characteristics of the different regions as may be determined from the instructions for ejecting fluid on the different regions. Actuation controller 380 may select a first collection of multiple sets of mask data for a first region, wherein each set of mask data in the first collection identifies a first primitive size or a first number of fluid actuators to be enabled for each actuation event of a first set of actuation events and wherein each set of mask data in the first collection is used during an actuation event of the first set. Actuation controller 380 may select a second collection of multiple sets of mask data for a second region, wherein each set of mask data in the second collection identifies a second primitive size or a first number of fluid actuators to be enabled for each actuation event of a second set of actuation events and wherein each set of mask data in the second collection is used during an actuation event of the second set. Such selection of the different collections of sets of mask data and their associated different number of enabled fluid actuators during an actuation event may be based upon actuation characteristics such as ejection or print density, the different compositions or distribution of the fluid itself being ejected in the different regions and/or different energy consumption profiles of the different regions.

As further schematically illustrated by Figure 6, actuation controller 380 may receive an actuation file or actuation instructions 90 for an ejection recipient 92, such as a sheet of print media, multiple sheets of print media, multiple print jobs, portions of a continuous web of print media or various other fluid recipients such as an array of vials, test pads or the like. The actuation instructions 90 may identify a pattern or image to be formed by a fluid or combinations of fluids ejected by fluid actuators 112. The actuation instructions may call for a first region 94 demanding first actuation characteristics and a second region 96 demanding second actuation characteristics different than the first actuation characteristics. An actuation characteristic is a characteristic associated with the called for actuation of different fluid actuators which may be dependent upon the called for displacement of fluid such as the density at which fluid droplets are to be ejected, the type of fluid actuators to be actuated, the type or color of fluid to be displaced or ejected or the energy demands or energy consumption profiles associated with the displacement or ejection of fluid to achieve the called for pattern or image.

Such characteristics may differ from one another. For example, one of regions 94, 96 may have text with a lower fluid actuator actuation density while the other of regions 94, 96 may have an image with a higher fluid actuator actuation density. One of regions 94, 96 may have a higher relative proportion or percentage of a first fluid that may demand higher energy to eject as compared to other fluids, such as black ink, while the other of regions 94, 96 has a lower relative portion or percentage of the first fluid, such as black ink. For example, region 94 may call for a larger number or a higher percentage of fluid actuators to be actuated to circulate fluid when a set of actuation events is to be carried out with respect to region 94 while region 96 may call for a larger number or higher percentage of fluid actuators to be actuated to eject fluid when a set of actuation event is to be carried out with respect to region 96.

Actuation controller 380 may analyze the actuation file/instructions 90 to identify the different actuation characteristics AC1 and AC2 of regions 94 and 96 on fluid recipient 92. Based upon the determined differences in the characteristics, actuation controller 380 may select differently sized primitives for use when enabling fluid actuators for carrying out ejection tasks respect to the different regions 94 and 96. To select differently size primitives, actuation controller 380 selects different collections of mask data sets, stored in sets of mask registers 350, 352, for controlling what subset of fluid actuators are enabled for actuation during each actuation event of a set of actuation events. For example, controller 380 may select a first collection of mask data sets stored in the set 350 of registers 318 for use when enabling fluid actuators with respect to region 94, wherein each of the mask data sets the set 350 of registers 318 enable a first number of fluid actuators per actuation event. Controller 380 may select a second set 352 of mask registers 318 for use when enabling fluid actuators with respect to region 96, wherein each of the sets of mask data in a set 352 enable a second number, different than the first number, of fluid actuators per actuation event.

In one scenario, actuation controller 380 may evaluate the called for fluid actuator actuation density at which fluid actuators are to be actuated during sets of actuation events carried out with respect to regions 94, 96. In such an implementation, actuation controller 80 may compare the identified fluid actuator actuation density of each of regions 94, 96 to a predefined stored threshold. In response to determining that the fluid actuator actuation density of region 94 is above the predefined threshold, such as where region 94 may comprise graphics, photos or other images, actuation controller 80 may select a first collection of mask data sets, stored in one of sets 350, 352 of mask registers 318 and corresponding to a larger primitive size, wherein a fewer number of fluid actuators or fluid ejectors are concurrently enabled during respective actuation events of a set. The fewer number of fluid actuators being enabled for concurrent actuation during each actuation event corresponds to a larger number of actuation events in the set of actuation events such that each fluid actuator is enabled at some time during the set. The larger number of actuation events corresponds to a larger total time to eject fluid into or onto the first region. The use of such a larger primitive size during the ejection of fluid in region 94 may result in system 310 staying within power constraints of system 310.

By way of contrast, in response to determining that the fluid actuator actuation density of region 96 is below the predefined threshold, such as where region 96 has more text, actuation controller 80 may select a second collection of mask data sets, stored in another one of sets 350, 352 of mask registry 18 and corresponding to a smaller primitive size, wherein a larger number of fluid actuators or fluid ejectors of the array are enabled for concurrent actuation during respective actuation events of a set. The larger number of fluid actuators being enabled for concurrent actuation during each actuation event corresponds to a smaller number of actuation events in the set such that each fluid actuator is enabled at some time during the set. The smaller number of actuation events corresponds to a smaller total time to eject fluid into or onto the second region. Use of such a smaller primitive size during the ejection of fluid in region 96 may result in system 310 completing the document or job in less time.

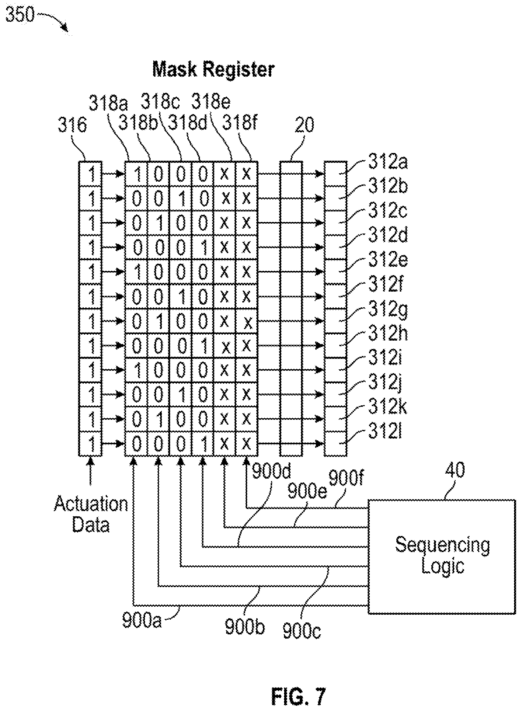

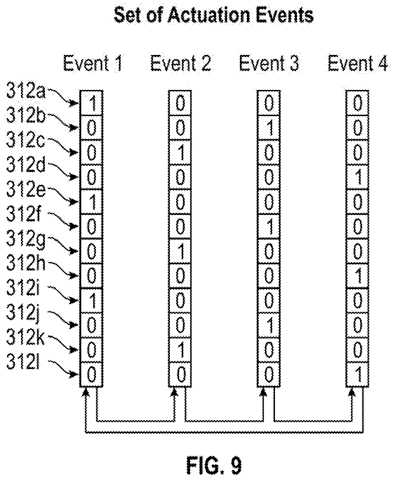

Figures 7-9 illustrate one example of fluid ejection system 310 during a set of actuation events with a collection of mask data sets selected by actuation controller 380 and stored in a set 350 of mask registers. Figure 9 illustrates a column or an array 314 of fluid actuators 312, actuation data register 316, mask registers 318a-318f of an example set 350 of mask registers, actuation logic 20 and sequencing logic 340 of system 310. Each of mask registers 318a-318f may be selected for an actuation event in response to signals transmitted by sequencing logic 340 across address selection lines 900a-900f, respectively. Those remaining components of system 310 of Figure 7 are shown and described with respect to Figure 6.

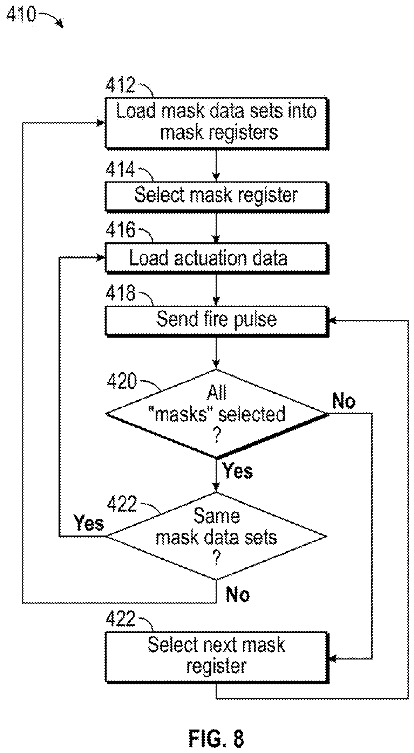

Figure 8 is a flow diagram illustrating an example method 410 for actuating fluid actuators. Method 410 is described as being carried out with system 310. It should be appreciative that method 410 may be carried out with any of the above described fluidic dies as well as similar fluidic dies.

As indicated by block 412, mask registers loading logic 336 (shown in Figure 6) loads the mask data sets into mask registers 318a-318f. In the example illustrated, logic 336 loads or populates four mask registers, registers 318a-318d, to support a set of for actuation events for primitives each comprising four fluid actuators 312. The last two mask registers 318e and 318f are not populated or are not used but are available for subsequent sets of actuation events involving a set of more than four actuation events for a primitive of more than four fluid actuators and up to six actuation events and a primitive of up to six fluid actuators. In the example illustrated, each of mask registers 318a-318f is populated with a pattern of 100010001000, wherein the pattern in each of the mask registers is shifted relative to the pattern in the other mask registers.

As shown by Figure 7, the shifting of the pattern is such that each fluid actuator 312 of array 314 has a corresponding bit in one of the registers 318A-318d with a value of 1 and such that the fluid actuator will be enabled at some time during the set of actuation events involving registers 318a-318d. In the example illustrated, the pattern in mask register 318b is shifted by two places with respect to the pattern in mask register 318a. The pattern in mask register 318c is shifted by one places with respect to the pattern in mask registers 318b. The pattern in mask registers 318d is shifted by two places with respect to the pattern in mask register 318c.

As indicated by block 414, sequencing logic 340 selects one of mask registers 318a-318d for the current actuation event, "event 1". In the example illustrated, sequencing logic 340 transmits an activating signal along address select line 400a to select the set of mask data stored in registers 318a. Such signals cause logic associated with registers 318a to output values based upon the values of the bits of mask register 318a.

As indicated by block 416, actuation data load logic 332 (shown in Figure 6) loads the full column of data or actuation data in actuation data register 316. For purposes of the disclosure, each respective bit 352a-I of the actuation data register 316 is loaded with a bit value of "1" such that every fluid actuator 314 (shown in Figure 6) corresponding to an unmasked bit of set 42 (corresponding to a bit and mask register 316 having a value of "1") will be actuated or fired (F) during the respective actuation event of the set of actuation events. As should be appreciated, in other implementations, the actual bits 352a-I of actuation data register 316 that are loaded with a bit value of "1" may be less than all of such bits and may be varied depending upon the nozzles or actuators 312 to be fired during the set of actuation events. For example, there may be instances where a particular fluid actuator 312 may correspond to an unmasked bit in mask 318, but will not be fired because the fluid actuator also has a corresponding bit in register 316 with a value of "0". It should be appreciated that the order of the loading and selection of mask data per blocks 412, 414, and the loading of actuation data per block 416 may be reversed.

As indicated by block 418, actuation logic 418 transmits a fire pulse to fluid actuators 312 based upon the corresponding values in the selected mask register 318a and the corresponding values in actuation data register 316. Actuation logic 120 electrically actuates those fluid actuators having a corresponding bit in register 318A with a value of "1" and a corresponding bit in register 316 having a value of "1".

Figure 9 is a schematic diagram which indicates those fluid actuators 312 that are actuated during each actuation event of the set of four actuation events. As shown by Figure 9, during the first actuation event, "event 1", fluid actuators 312a, 312e and 312i are enabled and actuated as their corresponding bits in mask register 318a and in actuation register 316 are both "1".

As indicated by block 420, sequencing logic 340 determines whether all of masks that have been loaded with sets of mask data, masks 318a-318d have been selected as part of the set of actuation events. As indicated by block 422, in response to mask registers 318 yet to be selected, sequencing logic 40 proceeds by once again selecting the next mask register for the next actuation event, "event 2". In the example scenario being discussed, sequencing logic 340 would select mask register 318b by transmitting a selection signal on address line 900b. As indicated by block 918, a fire pulse once again be sent by actuation logic 120 resulting in a different subset of actuators 312 being actuated. As shown by Figure 9, fluid actuators 312c, 312g and 312k are actuated during actuation event 2. Actions set forth in block 418, blocks 420 and 422 are repeated until each of the mask registers 318a-318d have been selected. As shown by Figure 9, during actuation event 3, fluid actuators 312b, 312f and 312j are enabled and actuated. During actuation event 4, fluid actuators 312d, 312hand 3121 are enabled and actuated.

As indicated by block 422, once the set of actuation events has been completed and each of the mask registers 318 populated with sets of mask data has been selected, a determination is made as to whether the next set of actuation events are to use the same mask data sets. In one implementation, sequencing logic or other logic on die 310 determines from mask data sets registry 34 whether new sets of mask data are to be used for the next set of actuation events. If the same mask data sets are to be used, method 410 proceeds to block 416 where new actuation data is loaded into actuation registry 16 and the actions of blocks 418, 420 and 422 repeat. If the same mask is sets are not to be used for the next set of actuation events, method 410 proceeds to block 412 where the new math data sets are loaded into mask registers 318. The new sets of mask data may utilize a greater or fewer number of such mask registers depending upon the size of the primitive selected by actuation controller 380 to be used during the next set of actuation events.

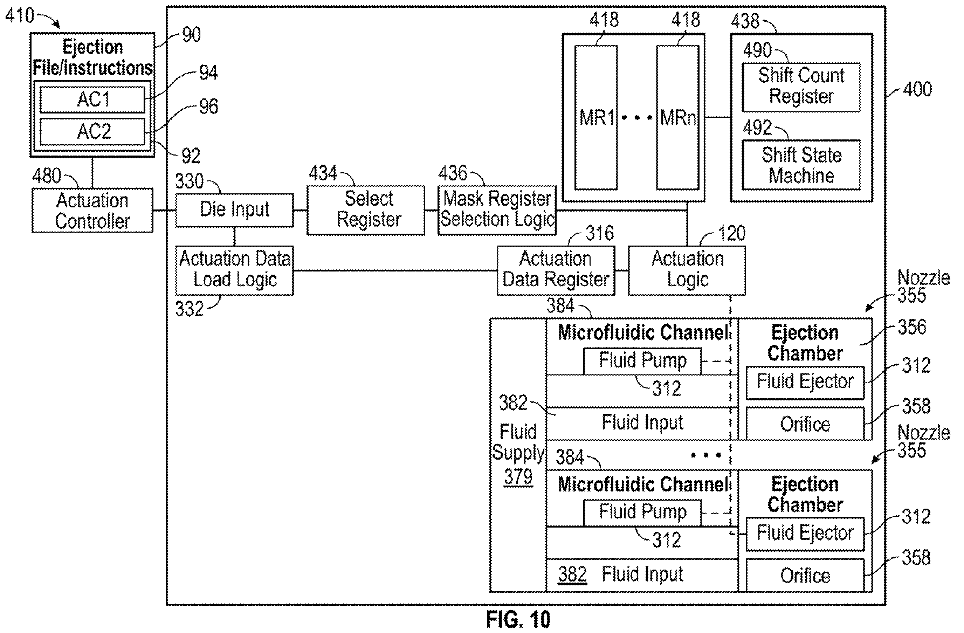

Figure 10 is a block diagram schematically illustrating some components of another example fluid ejection system 410. System 410 is similar to system 310 except that rather than selecting an entire collection of mask data sets or a set of mask registers for an entire set of actuation events, system 410 selects a single mask data set or a single mask register storing the single mask data set for the entire set of actuation events, wherein the single mask data set is shifted for each actuation event of the set of actuation events. System 410 is similar to system 310 except of system 410 comprises mask registers 418, selection register 434, mask register selection logic 436, mask control logic 438 and actuation controller 480. Those components of system 410 which correspond to points of system 310 are numbered similarly.

Mask registers 418 each store a set of mask data identifying a different number of fluid actuators to be actuated during a set of actuation events. In other words, each of mask registers 418 stores a set of mask data identifying a differently sized primitive. In one implementation, mask registers 418 are contained on a same fluidic die 400 on which fluid ejectors and fluid pumps are located.

Selection register 434 comprises a memory data register. Selection register 434 is similar to selection register 334 except that selection register 434 stores an input received by die input 330 from actuation controller 480 that indicates the set of mask data to be used for a set of actuation events. The input may be received in a header of a packet of data received from actuation controller 480. In one implementation, the input may specifically identify the mask register to be used for a set of actuation events. In other implementations, the input may identify a size of a primitive to be used, wherein mask register selection logic 436 determines which mask register contains the appropriate set of mask data for the selected primitive size. In another implementation, the input may identify the set of mask data, wherein mask when select logic 436 determines which mask register contains the set of mask data.

Mask register selection logic 436 comprises logic elements, circuitry and hardware connected to selection register 434, mask registers 418 and actuation logic 120. Based upon the selected mask register 418 stored in selection register 434, mask register selection logic 436 selectively connects one of mask registers 418 to actuation logic 120 for a set of actuation events.

Mask control logic 438 comprises logic to shift the selected set of mask data contained in the selected mask register 418 for each actuation event of the set of actuation events such that each fluid actuator of each primitive or each fluid actuator of the array is enabled at some time during the set of actuation events. Mask control logic 438 comprises logic circuitry such as processing hardware and/or software coupled to mask register 418. Mask control logic 438 shifts the set of mask data stored in mask register 418 responsive to a respective actuation event to thereby indicate another subset of fluid actuators enabled for actuation for another respective actuation event of the set of actuation events. In one implementation, mask control logic 438 comprises a shift count register 490 and a shift state machine 492, the shift state machine 492 being connected to the mask registers 418 or at least the selected mask register 418. In such an implementation, the shift count register 490 stores the skip pattern, the extent to which the set of mask data is to be shifted within the selected mask register 418. The shift state machine is to input a shift clock to the mask register to shift the mask data stored in the mask register. In other implementations, mask control logic 438 may comprise other circuitry for carrying out the shifting of the selected set of mask data in the selected register 418.

Actuation controller 480 is similar to actuation controller 80 described above in that actuation controller 680 analyzes different regions, such as regions 94, 96, to determine if different actuation characteristics in the different regions, call for the use of different sized primitives when ejecting fluid in the different regions. Actuation controller 480 supplies an input to die input 330 that indicates the set of mask data in mask register 618 that should be used for a set of actuation events as described above. In one implementation, actuation controller 480 is located remote from die 400. In another implementation, actuation controller 480 or portions of actuation controller 480 may be located on die 400.

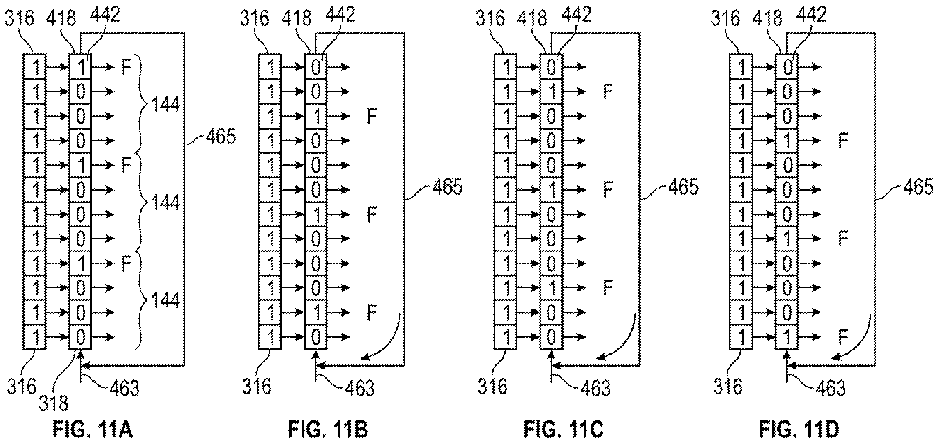

Figures 11A-11D illustrate an example set of actuation events with an example set 442 of mask data in mask register 318. For purposes of the disclosure, each respective bit 352a-I of the actuation data register 316 is loaded with a bit value of "1" such that every fluid actuator in the form of either fluid ejector or fluid pump 314 corresponding to an unmasked bit of set 442 (corresponding to a bit of actuation data register 316 having a value of "1") will be actuated or fired (F) during the respective actuation event of the set of actuation events. As should be appreciated, in other implementations, the actual bits 352a-I of actuation data register 316 that are loaded with a bit value of "1" may be less than all of such bits and may be varied depending upon the nozzles or actuators 312 to be fired during the set of actuation events. For example, there may be instances where a particular fluid actuator may correspond to an unmasked bit in mask 418, but will not be fired because the fluid actuator also has a corresponding bit in register 316 with a value of "0".

Figure 11A illustrate a first example actuation event of the series or set of actuation events as shown in Figures 11A-11D. In the example illustrated, the number of actuation events of the set is such that each bit of each subset 444 is assigned a value of "1" during one actuation event of the set of actuation events. In other words, each fluid actuator 312 is enabled at least once in an actuation event of the set of actuation events. The number of actuation events corresponds to the length of each subset 444, the number of bits in each subset 44, which correspond to the size of the primitive.

In the illustrated example, actuation controller 480 has selected a set of mask data identifying a primitive size of four fluid actuators. This value is stored in selection register 434 (shown in Figure 10). Based upon the input stored in selection register 434, mask register selection logic 436 selectively connects the selected mask register 418 with a primitive size of four with a four bit pattern of mask data. In the example illustrated, the set 442 is composed of three subsets 444, each subset 444 having a four bit pattern of mask data, 1 0 0 0, corresponding to a primitive length of four actuators. As a result, the set of actuation events shown in Figures 11A-11D has four actuation events such that each fluid actuator is enabled at least once during the set. In other implementations where each subset 144 has a length of six bits, the set of actuation events may correspondingly be composed of six actuation events.

Thereafter, actuation logic 120 actuates individual fluid actuators, the fluid ejectors and the fluid pumps, based upon the corresponding values in actuation data registry 316 and the bits of mask register 418. In the first example actuation event, the fluid actuator corresponding to the first bit of each subset4 44 or each primitive will be actuated or fired as indicated by "F". In the example shown in Figure 4, fluid actuators 312a, 312e and 312i are unmasked and will be fired or actuated during the first actuation event of the set of actuation events.

Figure 11B illustrates mask register 418 after mask control logic 438 in Figure 10 has shifted the set 442 in the direction indicated by arrow 463 for the second actuation event of the set. As indicated by arrow 465, set 442 is looped back during such shifting. In the example illustrated, mask control logic 438 circularly shifts set 442 by two bits or places in the direction indicated by arrow 463. Skipping a bit or shifting by more than one bit assures that a fluid actuator 312 adjacent to the fluid actuator that was actuated or fired in the immediately preceding actuation event will not fired. The shift results in the fluid actuator corresponding to the third bit of each subset 444 or each primitive being actuated or fired. In the example shown in Figure 11B, fluid actuators 312c, 312g and 312k are unmasked and will be fired or actuated during second actuation event of the set. Although such shifting is illustrated as being performed in a circular manner in the direction indicated by arrow 465, in other implementations, such shifting may occur in the opposite direction. In still other implementations, such shifting may occur in other fashions such as according to a first in/first out shift.

Figure 11C illustrates mask register 418 after mask control logic 438 in Figure 10 has once again shifted the set 442 (from the state shown in Figure 11B) in the direction indicated by arrow 463 for the third actuation event of the set. In the example illustrated, mask control logic 438 shifts set 442 by one bit or place in the direction indicated by arrow 463. The shift results in the fluid actuator corresponding to the second bit of each subset 444 or each primitive being actuated or fired. In the example shown in Figure 11C, fluid actuator s312b, 312f and 312j are unmasked and will be fired or actuated during third actuation event of the set.

Figure 11D illustrates mask register 418 after mask control logic has once again shifted the set 442 (from the state shown in Figure 11C) in the direction indicated by arrow 463 for the fourth and final actuation event of the set. In the example illustrated, mask control logic 438 shifts set 442 by two bits or places in the direction indicated by arrow 463. The shift results in the fluid actuator corresponding to the fourth bit of each subset 444 or each primitive being actuated or fired. In the example shown in Figure 11D, fluid actuators 312d, 312h and 3121 are unmasked and will be fired or actuated during fourth actuation event of the set.

The skip pattern or number of bits by which pattern 442 is shifted for each actuation event is dependent upon the length of each subset 444 and the corresponding number of actuation events. The number of bits by which pattern 442 is shifted may vary from one actuation event to another or may be uniform from one actuation event or another.

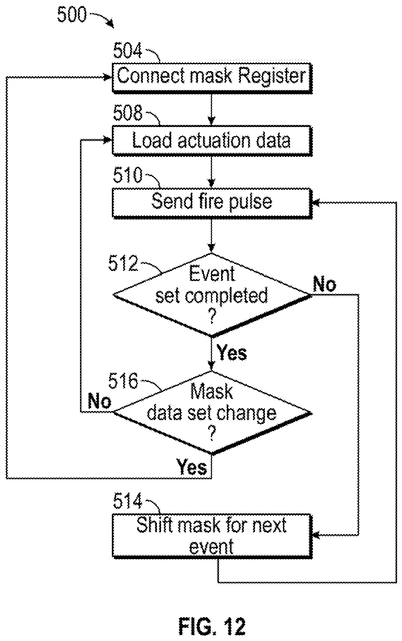

Figure 12 is a flow diagram of an example method 500 by which actuators 312 may be actuated for a set of actuation events. For purposes of the disclosure, method 500 is described as being carried out with system 410. It should be appreciated that method 500 may be carried out with any of the fluidic dies described herein or with other similar fluidic dies.

As indicated by block 504, mask register selection logic 436 connects the mask register selected by actuation controller 480 to actuation logic 120. As indicated by block 508, actuation data load logic 332 loads actuation data register 316 with actuation data. As indicated by block 510, a fire pulse is generated and transmitted to actuation logic 120. Actuation logic 120 selectively actuates those fluid actuators 312 for which the respective bits in registers 316 and 418 are both active or have a value of "1". Such actuation is controlled based upon the received fire pulse. It should be appreciated that the order of the connection of mask register per block 504 and the loading of actuation data per block 508 may be reversed.

As indicated by block 512, mask control logic 438 determines whether the set of actuation events has been completed. As indicated above, a set of actuation events is completed when each fluid actuator has been enabled during the set of actuation events. In other words, each bit value in each subset 444 has had a value of "1" during the set of actuation events. As indicated by block 514, in response to the event set not being completed, mask control logic 438 shifts the set 442 of mask data in register 418 in accordance with the skip pattern as described above. Per block 510, a fire pulse is once again transmitted to actuation logic 120 which selectively actuates those fluid actuators 312 for which the respective bits in registers 316 and 318 are both active or have a value of "1".

As indicated by block 516, in response to mask control logic 438 determining that the set of actuation events has been completed, the process repeats with mask register selection logic 436 reading the input from actuation controller 480 stored in selection register 434 and connecting the appropriate mask register 418 to actuation logic 120 for the next set of actuation events (block 504). A new set of actuation data may further be loaded into actuation logic 120 per block 508.

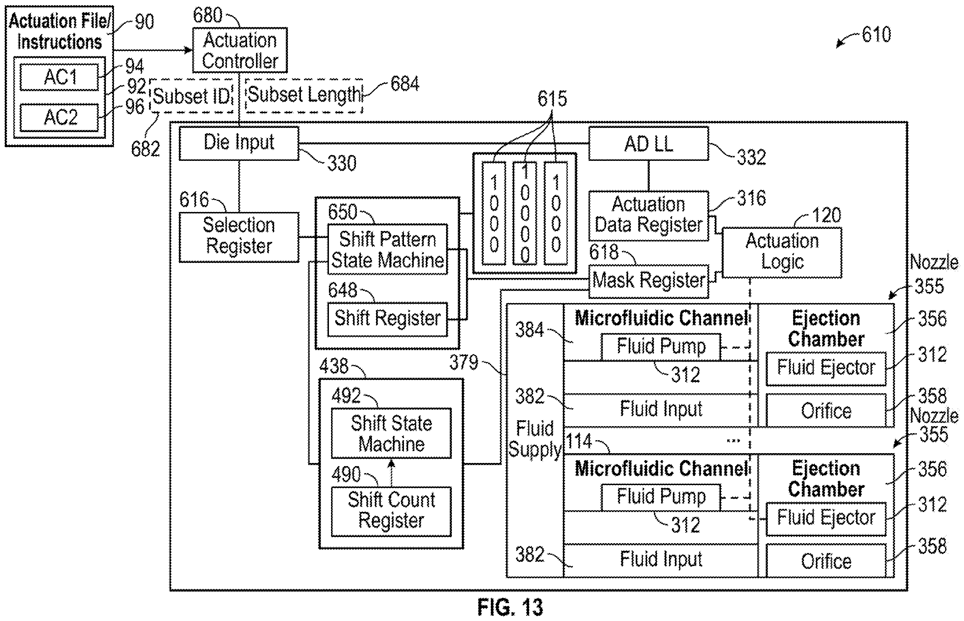

Figure 13 is a block diagram schematically illustrating some components of an example fluid ejection system 610. Fluid ejection system 610 is similar to fluid ejection system except that rather than selecting an entire set of mask data for a set of actuation events, wherein the set of mass data is shifted for each actuation event, the actuation controller selects a subset of the set of mask data for a set of actuation events, wherein the selected subset is repeatedly loaded into a mask register to form the set of mask data and wherein the thus formed set of mask data is shifted for each actuation event of the set. Ejection system 610 is similar to ejection system 410 except that ejection system 610 comprises subset registers 615, selection register 616, mask generation circuit 617, mask register 618 and actuation controller 680. Those remaining components of system 610 which correspond to components of system 410 are numbered similarly.

Subset registers 615 comprise memory data registers that store different subsets of mass data, different available patterns of mass data, for use in generating a set of mask data to be used during a set of actuation events. In the example illustrated, subset registers 615 are illustrated as storing three subsets or patterns of mask data: a first subset 1 0 0 0 identifying a primitive size of four fluid actuators; a second subset 1 0 0 0 0 identifying a primitive size of five fluid actuators; and a third subset 1 0 0 identifying a primitive size of three fluid actuators. As should be appreciated, the number of subset registers 615 as well as the number of available subsets or patterns for use in building a set of mask data in register 618 may vary.

Selection register 616 comprise a memory data register that stores stores an input received by die input 330 from actuation controller 680 that indicates the pattern or subset of mask data to be used by mask generation circuit 617 when building a set of mask data in registers 618 for a set of actuation events. The input may be received in a header of a packet of data received from actuation controller 480. In one implementation, the input may specifically identify the subset registers 615 to be used (subset ID 682). In other implementations, the input may identify a size of a primitive or a subset length to be used (subset length 684), wherein mask generation circuit 617 determines which subset register contains the appropriate pattern of mask data for the selected primitive size. In one implementation subset registers 615 may be omitted, wherein mask generation circuit 617 generates or builds the full set of mass data in mask 618 based upon the primitive size or subset length (subset length 684) that is been selected.

Mask generation circuit 617 comprises memory and/or logic elements on die 400 that build a set of mask data with subsets of mask data that serve as building blocks for the larger set of mask data populating mask register 618. Mask data generation circuitry 617 builds a set of mask data from a plurality of individual subsets of mask data. In one implementation, mask data generation circuitry 617 loads the individual subsets of mask data into mask register 618 when forming the set of mask data. Each of the subsets have a pattern of mask data based upon at least one selection input received at die input 330 from actuation controller 680. In one implementation, the subset of mask data in the selected subset registers 615 is repeatedly loaded into mask register 18 until mask is 618 is populated with the full set of mask data..

Mask data generation circuitry 617 facilitates the building of different sets of mask data directly on die 400. Because the different sets of mask data may be built directly on die 400, it is contemplated that the consumption of transmission bandwidth may be reduced and speed may be increased. Moreover, die 400 may provide enhanced flexibility and control over the displacement of fluid by fluid ejectors and fluid pumps through the selection and control over the pattern of mask data in the subsets that make up the larger set of mask data that populates mask register 618.

In one implementation, mask generation circuitry 617 comprises shift register 648 and shift pattern state machine 650. Shift register 648 comprises a memory data register which temporarily stores the subset of mask data which forms a part of the larger overall set of mask data that populates mask register 18.

Shift pattern state machine 650 comprises electronic circuitry, hardware and/or software formed upon die 400 that generates subsets based upon the pattern select input stored in selection register 616. In the example illustrated, shift pattern state machine 650 loads shift register 618 with bits having a pattern of values corresponding to the pattern of mask data in the selected subset registers 615. Shift pattern state machine 650 loads mask register 618 18 by shifting the generated pattern of mask data, forming the subset and temporarily stored in shift register 648, into mask register 618. This process is repeated multiple times to populate mask register 618 with the larger set of mask data for a set or series of actuation events. In one implementation, shift pattern state machine 250 may repeatedly generate subsets 44 of the same pattern of mask data, wherein each duplicate subset of mask data is loaded into mask register 618 to form the larger set of mask data.

Once the set of mask data has been generated in mask register 618, the set of actuation events is carried out as described above with respect to method 500. Actuation data load logic 332 loads actuation data register 316 with actuation data for the set of actuation events. Actuation logic 120 actuates a subset of the fluid ejectors and fluid pumps based upon the actuation data in register 316 and the set of mask data in mask layer 618 for the individual actuation events. For each subsequent actuation event of the set, mask control logic 438 shifts the set of mass data in mask register 618 in the process is repeated until a set of actuation events has been completed.

Actuation controller 680 is similar to actuation controller 80 described above in that actuation controller 680 analyzes different regions, such as regions 94, 96, to determine if different actuation characteristics in the different regions, call for the use of different sized primitives when ejecting fluid in the different regions. Actuation controller 680 supplies an input to die input 330 that indicates the selected subset are pattern to be used when building the set of mask data in mask register 618. In one implementation, actuation controller 680 is located remote from die 400. In another implementation, actuation controller 680 or portions of actuation controller 680 may be located on die 400.

Although the present disclosure has been described with reference to example implementations, workers skilled in the art will recognize that changes may be made in form and detail without departing from the scope of the claimed subject matter. For example, although different example implementations may have been described as including one or more features providing one or more benefits, it is contemplated that the described features may be interchanged with one another or alternatively be combined with one another in the described example implementations or in other alternative implementations. Because the technology of the present disclosure is relatively complex, not all changes in the technology are foreseeable. The present disclosure described with reference to the example implementations and set forth in the following claims is manifestly intended to be as broad as possible. For example, unless specifically otherwise noted, the claims reciting a single particular element also encompass a plurality of such particular elements. The terms "first", "second", "third" and so on in the claims merely distinguish different elements and, unless otherwise stated, are not to be specifically associated with a particular order or particular numbering of elements in the disclosure.

## Claims

1. A fluid ejection system comprising:
an actuation controller (80, 380) to:
select a first set (82) of mask data for enabling fluid actuators with respect to a first region, the first set of mask data indicating a first number of fluid actuators of an array (350) of fluid actuators enabled for actuation for a respective actuation event of a first set of actuation events; and
select a second set (84) of mask data for enabling fluid actuators with respect to a second region, the second set of mask data indicating a second number of fluid actuators of the array (350) of fluid actuators, different than the first number, enabled for actuation for a respective actuation event of a second set of actuation events,
wherein the actuation controller (80, 380) is to select the first set (82) of mask data and to select the second set (84) of mask data based upon a first power profile of the first region and a second power profile of the second region, different than the first power profile, the first power profile and the second power profile indicating an amount of power to be consumed during ejection of the fluid in the first region and in the second region, respectively.

2. The fluid ejection system of claim 1, wherein the controller (80, 380) is to select the first set (82) of mask data and to select the second set (84) of mask data based upon a characteristic of fluid actuations with respect to the first region and a characteristic of fluid actuations with respect to the second region.

3. The fluid ejection system of claim 2, wherein the characteristic comprises a first fluid actuator actuation density of the first region and a second fluid actuator actuation density of the second region, respectively.

4. The fluid ejection system of claim 3, wherein the controller (80, 380) is to determine the first fluid actuator actuation density of the first region and the second fluid actuator actuation density of the second region based upon image data.

5. The fluid ejection system of claim 2, wherein the characteristic comprises a first fluid composition of fluid ejected on the first region and a second fluid composition of fluid ejected on the second region.

6. The fluid ejection system of claim 2, wherein the actuation controller (80, 380) is to select the first set (82) of mask data and to select the second set (84) of mask data additionally based upon power characteristics of the system.

7. The fluid ejection system of claim 2, wherein the actuation controller (80, 380) is to select the first set (82) of mask data and the second set (84) of mask data based on at least one of (1) actuation type-ejection versus pumping and (2) fluid ejection drop weight.

8. The fluid ejection system of claim 1 further comprising:
the array (350) of fluid actuators;
an actuation data register (316) to store actuation data that indicates each fluid actuator of the array (350) of fluid actuators to actuate for the set of actuation events;
at least one mask register (318) to store the first set (82) of mask data and the second set (84) of mask data; and
actuation logic (120) coupled to the actuation data register (316), the at least one mask register (318), and the respective fluid actuators, the actuation logic to electrically actuate a subset of the fluid actuators based at least in part on the actuation data register and the at least one mask register for the respective actuation event.

9. The fluid ejection system of claim 1, wherein the actuation controller (80, 380) selects the first set (82) of mask data by selecting a subset of the first set of mask data, the subset being repeated to form the first set of mask data.

10. The fluid ejection system of claim 1, wherein the actuation controller (80, 380) selects the first set (82) of mask data by selecting a mask register (318) storing the first set of mask data.

11. A method comprising:
selecting a first set (82) of mask data for enabling fluid actuators with respect to a first region, the first set of mask data indicating a first number of fluid actuators of an array (350) of fluid actuators enabled for actuation for a respective actuation event of a first set of actuation events; and
selecting a second set (84) of mask data for enabling fluid actuators with respect to a second region, the second set of mask data indicating a second number of fluid actuators of the array (350), different than the first number, enabled for actuation for a respective actuation event of a second set of actuation events; and
transmitting the selection of the first set (82) of mask data and the selection of the second set (84) of mask data to actuation logic (120) to enable the first number of fluid actuators for the respective actuation event of the first set of actuation events and the second number of fluid actuators for the respective actuation event of the second set of actuation events, respectively;
wherein the first set (82) of mask data and the second set (84) of mask data are selected based upon a first power profile of the first region and a second power profile of the second region, different than the first power profile, the first power profile and the second power profile indicating an amount of power to be consumed during ejection of the fluid in the first region and in the second region, respectively.

12. The method of claim 11, wherein selection of the first set (82) of mask data and selection of the second set (84) of mask data is based upon a characteristic of fluid actuations with respect to the first region and a characteristic of fluid actuations with respect to the second region.

13. A non-transitory computer-readable medium containing instructions for directing a processor to:
determine a first fluid actuation characteristic for a first region;
determine a second fluid characteristic for a second region;
select a first set (82) of mask data for enabling fluid actuators with respect to the first region based upon the determined first fluid actuation characteristic, the first set of mask data indicating a first number of fluid actuators of an array (350) of fluid actuators enabled for actuation for a respective actuation event of a first set of actuation events;
select a second set (84) of mask data for enabling fluid actuators with respect to the second region based upon the determined first fluid actuation characteristic, the second set of mask data indicating a second number of fluid actuators of an array (350), different than the first number, enabled for actuation for a respective actuation event of a second set of actuation events; and
transmit the selection of the first set (82) of mask data and the selection of the second set (84) of mask data to actuation logic (120) to enable the first number of fluid actuators for the respective actuation event of the first set of actuation events and the second number of fluid actuators for the respective actuation event of the second set of actuation events, respectively;
wherein the instructions direct the controller (80, 380) to select the first set (82) of mask data and to select the second set (84) of mask data based upon a first power profile of the first region and a second power profile of the second region, different than the first power profile, the first power profile and the second power profile indicating an amount of power to be consumed during ejection of the fluid in the first region and in the second region, respectively.

14. The computer-readable medium of claim 13, wherein first fluid actuation characteristic and the second fluid actuation characteristic comprise a first fluid actuator actuation density and a second fluid actuator actuation density, respectively.

## Patentansprüche

1. Fluidausstoßsystem, das Folgendes umfasst:
eine Betätigungssteuerung (80, 380) für Folgendes:
Auswählen eines ersten Satzes (82) von Maskendaten zum Aktivieren von Fluidaktuatoren in Bezug auf einen ersten Bereich, wobei der erste Satz von Maskendaten eine erste Anzahl von Fluidaktuatoren einer Anordnung (350) von Fluidaktuatoren angibt, die für eine Betätigung für ein jeweiliges Betätigungsereignis eines ersten Satzes von Betätigungsereignissen aktiviert ist; und
Auswählen eines zweiten Satzes (84) von Maskendaten zum Aktivieren von Fluidaktuatoren in Bezug auf einen zweiten Bereich, wobei der zweite Satz von Maskendaten eine zweite Anzahl von Fluidaktuatoren der Anordnung (350) von Fluidaktuatoren angibt, die sich von der ersten Anzahl unterscheidet, die für die Betätigung für ein jeweiliges Betätigungsereignis eines zweiten Satzes von Betätigungsereignissen aktiviert ist,
wobei die Betätigungssteuerung (80, 380) dazu dient, den ersten Satz (82) von Maskendaten und den zweiten Satz (84) von Maskendaten basierend auf einem ersten Leistungsprofil des ersten Bereichs und einem zweiten Leistungsprofil des zweiten Bereichs, das sich von dem ersten Leistungsprofil unterscheidet, auszuwählen, wobei das erste Leistungsprofil und das zweite Leistungsprofil eine Leistungsmenge angeben, die während eines Ausstoßes des Fluids in dem ersten Bereich beziehungsweise in dem zweiten Bereich verbraucht werden soll.

2. Fluidausstoßsystem nach Anspruch 1, wobei die Steuerung (80, 380) dazu dient, den ersten Satz (82) von Maskendaten und den zweiten Satz (84) von Maskendaten basierend auf einer Charakteristik von Fluidbetätigungen in Bezug auf den ersten Bereich und einer Charakteristik von Fluidbetätigungen in Bezug auf den zweiten Bereich auszuwählen.

3. Fluidausstoßsystem nach Anspruch 2, wobei die Charakteristik eine erste Fluidaktuatorbetätigungsdichte des ersten Bereichs beziehungsweise eine zweite Fluidaktuatorbetätigungsdichte des zweiten Bereichs umfasst.

4. Fluidausstoßsystem nach Anspruch 3, wobei die Steuerung (80, 380) dazu dient, die erste Fluidaktuatorbetätigungsdichte des ersten Bereichs und die zweite Fluidaktuatorbetätigungsdichte des zweiten Bereichs basierend auf Bilddaten zu bestimmen.

5. Fluidausstoßsystem nach Anspruch 2, wobei die Charakteristik eine erste Fluidzusammensetzung von auf den ersten Bereich ausgestoßenem Fluid und eine zweite Fluidzusammensetzung von auf den zweiten Bereich ausgestoßenem Fluid umfasst.

6. Fluidausstoßsystem nach Anspruch 2, wobei die Betätigungssteuerung (80, 380) dazu dient, den ersten Satz (82) von Maskendaten auszuwählen und zusätzlich den zweiten Satz (84) von Maskendaten basierend auf den Leistungscharakteristiken des Systems auszuwählen.

7. Fluidausstoßsystem nach Anspruch 2, wobei die Betätigungssteuerung (80, 380) dazu dient, den ersten Satz (82) von Maskendaten und den zweiten Satz (84) von Maskendaten basierend auf (1) betätigungsartigem Ausstoßen vs. Pumpen und/oder (2) Fluidausstoßtropfengwicht auszuwählen.

8. Fluidausstoßsystem nach Anspruch 1, das ferner Folgendes umfasst:
die Anordnung (350) von Fluidaktuatoren;
ein Betätigungsdatenregister (316), um Betätigungsdaten zu speichern, die jedem Fluidaktuator der Anordnung (350) von Fluidaktuatoren angeben, für den Satz von Betätigungsereignissen zu betätigen;
wenigstens ein Maskenregister (318), um den ersten Satz (82) von Maskendaten und den zweiten Satz (84) von Maskendaten zu speichern; und
Betätigungslogik (120), die mit dem Betätigungsdatenregister (316), dem wenigstens einen Maskenregister (318) und den jeweiligen Fluidaktuatoren gekoppelt ist, wobei die Betätigungslogik dazu dient, einen Teilsatz der Fluidaktuatoren elektrisch zu betätigen, basierend wenigstens teilweise auf dem Betätigungsdatenregister und dem wenigstens einen Maskenregister für das jeweilige Betätigungsereignis.

9. Fluidausstoßsystem nach Anspruch 1, wobei die Betätigungssteuerung (80, 380) den ersten Satz (82) von Maskendaten durch Auswählen eines Teilsatzes des ersten Satzes von Maskendaten auswählt, wobei der Teilsatz wiederholt wird, um den ersten Satz von Maskendaten auszubilden.

10. Fluidausstoßsystem nach Anspruch 1, wobei die Betätigungssteuerung (80, 380) den ersten Satz (82) von Maskendaten durch Auswählen eines Maskenregisters (318) auswählt, in dem der erste Satz von Maskendaten gespeichert ist.

11. Verfahren, das Folgendes umfasst:
Auswählen eines ersten Satzes (82) von Maskendaten zum Aktivieren von Fluidaktuatoren in Bezug auf einen ersten Bereich, wobei der erste Satz von Maskendaten eine erste Anzahl von Fluidaktuatoren einer Anordnung (350) von Fluidaktuatoren angibt, die für die Betätigung für ein jeweiliges Betätigungsereignis eines ersten Satzes von Betätigungsereignissen aktiviert ist; und
Auswählen eines zweiten Satzes (84) von Maskendaten zum Aktivieren von Fluidaktuatoren in Bezug auf einen zweiten Bereich, wobei der zweite Satz von Maskendaten eine zweite Anzahl von Fluidaktuatoren der Anordnung (350) von Fluidaktuatoren angibt, die sich von der ersten Anzahl unterscheidet, die für die Betätigung für ein jeweiliges Betätigungsereignis eines zweiten Satzes von Betätigungsereignissen aktiviert ist; und
Übertragen der Auswahl des ersten Satzes (82) von Maskendaten und der Auswahl des zweiten Satzes (84) von Maskendaten an die Betätigungslogik (120), um die erste Anzahl von Fluidaktuatoren für das jeweilige Betätigungsereignis des ersten Satzes von Betätigungsereignissen beziehungsweise die zweite Anzahl von Fluidaktuatoren für das jeweilige Betätigungsereignis des zweiten Satzes von Betätigungsereignissen zu aktivieren;
wobei der erste Satz (82) von Maskendaten und der zweite Satz (84) von Maskendaten basierend auf einem ersten Leistungsprofil des ersten Bereichs und einem zweiten Leistungsprofil des zweiten Bereichs, das sich von dem ersten Leistungsprofil unterscheidet, ausgewählt werden, wobei das erste Leistungsprofil und das zweite Leistungsprofil eine Leistungsmenge angeben, die während des Ausstoßes des Fluids in dem ersten Bereich beziehungsweise in dem zweiten Bereich verbraucht werden soll.

12. Verfahren nach Anspruch 11, wobei die Auswahl des ersten Satzes (82) von Maskendaten und die Auswahl des zweiten Satzes (84) von Maskendaten auf einer Charakteristik von Fluidbetätigungen in Bezug auf den ersten Bereich und einer Charakteristik von Fluidbetätigungen in Bezug auf den zweiten Bereich basiert.

13. Nichtflüchtiges computerlesbares Medium, das Anweisungen zum Anweisen eines Prozessors zu Folgendem enthält:
Bestimmen einer ersten Fluidbetätigungscharakteristik für einen ersten Bereich;
Bestimmen einer zweiten Fluidcharakteristik für einen zweiten Bereich;
Auswählen eines ersten Satzes (82) von Maskendaten zum Aktivieren von Fluidaktuatoren in Bezug auf den ersten Bereich, basierend auf der ersten Fluidbetätigungscharakteristik, wobei der erste Satz von Maskendaten eine erste Anzahl von Fluidaktuatoren einer Anordnung (350) von Fluidaktuatoren angibt, die für die Betätigung für ein jeweiliges Betätigungsereignis eines ersten Satzes von Betätigungsereignissen aktiviert ist;
Auswählen eines zweiten Satzes (84) von Maskendaten zum Aktivieren von Fluidaktuatoren in Bezug auf den zweiten Bereich, basierend auf der ersten Fluidbetätigungscharakteristik, wobei der zweite Satz von Maskendaten eine zweite Anzahl von Fluidaktuatoren einer Anordnung (350) angibt, die sich von der ersten Anzahl unterscheidet, die für die Betätigung für ein jeweiliges Betätigungsereignis eines zweiten Satzes von Betätigungsereignissen aktiviert ist; und
Übertragen der Auswahl des ersten Satzes (82) von Maskendaten und der Auswahl des zweiten Satzes (84) von Maskendaten an die Betätigungslogik (120), um die erste Anzahl von Fluidaktuatoren für das jeweilige Betätigungsereignis des ersten Satzes von Betätigungsereignissen beziehungsweise die zweite Anzahl von Fluidaktuatoren für das jeweilige Betätigungsereignis des zweiten Satzes von Betätigungsereignissen zu aktivieren;
wobei die Anweisungen die Steuerung (80, 380) anweisen, den ersten Satz (82) von Maskendaten auszuwählen und den zweiten Satz (84) von Maskendaten auszuwählen, basierend auf einem ersten Leistungsprofil des ersten Bereichs und einem zweiten Leistungsprofil des zweiten Bereichs, das sich von dem ersten Leistungsprofil unterscheidet, wobei das erste Leistungsprofil und das zweite Leistungsprofil eine Leistungsmenge angeben, die während des Ausstoßes des Fluids in dem ersten Bereich beziehungsweise in dem zweiten Bereich verbraucht werden soll.

14. Computerlesbares Medium nach Anspruch 13, wobei die erste Fluidbetätigungscharakteristik und die zweite Fluidbetätigungscharakteristik eine erste Fluidaktuatorbetätigungsdichte beziehungsweise eine zweite Fluidaktuatorbetätigungsdichte umfassen.

## Revendications

1. Système d'éjection de fluide, comprenant :
un dispositif de commande d'actionnement (80, 380) pour :
sélectionner un premier ensemble (82) de données de masque permettant l'activation d'actionneurs de fluide par rapport à une première région, le premier ensemble de données de masque indiquant un premier nombre d'actionneurs de fluide d'un réseau (350) d'actionneurs de fluide activés pour un actionnement pour un événement d'actionnement respectif d'un premier ensemble d'événements d'actionnement ; et
sélectionner un second ensemble (84) de données de masque permettant l'activation des actionneurs de fluide par rapport à une seconde région, le second ensemble de données de masque indiquant un second nombre d'actionneurs de fluide du réseau (350) d'actionneurs de fluide, différent du premier nombre, activés pour l'actionnement pour un événement d'actionnement respectif d'un second ensemble d'événements d'actionnement,
le dispositif de commande d'actionnement (80, 380) devant sélectionner le premier ensemble (82) de données de masque et sélectionner le second ensemble (84) de données de masque sur la base d'un premier profil de puissance de la première région et d'un second profil de puissance de la seconde région, différent du premier profil de puissance, le premier profil de puissance et le second profil de puissance indiquant une quantité de puissance devant être consommée lors de l'éjection du fluide dans la première région et dans la seconde région, respectivement.

2. Système d'éjection de fluide selon la revendication 1, le dispositif de commande (80, 380) devant sélectionner le premier ensemble (82) de données de masque et sélectionner le second ensemble (84) de données de masque sur la base d'une caractéristique d'actionnements de fluide par rapport à la première région et une caractéristique des actionnements de fluide par rapport à la seconde région.

3. Système d'éjection de fluide selon la revendication 2, la caractéristique comprenant une première densité d'actionnement d'actionneur de fluide de la première région et une seconde densité d'actionnement d'actionneur de fluide de la seconde région, respectivement.

4. Système d'éjection de fluide selon la revendication 3, le dispositif de commande (80, 380) devant déterminer la première densité d'actionnement d'actionneur de fluide de la première région et la seconde densité d'actionnement d'actionneur de fluide de la seconde région sur la base de données d'image.

5. Système d'éjection de fluide selon la revendication 2, la caractéristique comprenant une première composition fluide de fluide éjectée sur la première région et une seconde composition fluide de fluide éjectée sur la seconde région.

6. Système d'éjection de fluide selon la revendication 2, le dispositif de commande d'actionnement (80, 380) devant sélectionner le premier ensemble (82) de données de masque et sélectionner le second ensemble (84) de données de masque en plus sur la base des caractéristiques de puissance du système.

7. Système d'éjection de fluide selon la revendication 2, le dispositif de commande d'actionnement (80, 380) devant sélectionner le premier ensemble (82) de données de masque et le second ensemble (84) de données de masque sur la base (1) d'un actionnement de type éjection par rapport au pompage et/ou (2) du poids de la goutte d'éjection de fluide.

8. Système d'éjection de fluide selon la revendication 1, comprenant en outre :
le réseau (350) d'actionneurs de fluide ;
un registre de données d'actionnement (316) pour stocker des données d'actionnement qui indiquent chaque actionneur de fluide du réseau (350) d'actionneurs de fluide à actionner pour l'ensemble d'événements d'actionnement ;
au moins un registre de masque (318) pour stocker le premier ensemble (82) de données de masque et le second ensemble (84) de données de masque ; et
un module logique d'actionnement (120) couplée au registre de données d'actionnement (316), à l'au moins un registre de masque (318), et aux actionneurs de fluide respectifs, le module logique d'actionnement permettant d'actionner électriquement un sous-ensemble d'actionneurs de fluide sur la base au moins en partie du registre de données d'actionnement et l'au moins un registre de masque pour l'événement d'actionnement respectif.

9. Système d'éjection de fluide selon la revendication 1, le dispositif de commande d'actionnement (80, 380) sélectionnant le premier ensemble (82) de données de masque en sélectionnant un sous-ensemble du premier ensemble de données de masque, le sous-ensemble étant répété pour former le premier ensemble de données de masque.

10. Système d'éjection de fluide selon la revendication 1, le dispositif de commande d'actionnement (80, 380) sélectionnant le premier ensemble (82) de données de masque en sélectionnant un registre de masque (318) stockant le premier ensemble de données de masque.

11. Procédé comprenant :
la sélection d'un premier ensemble (82) de données de masque permettant l'activation des actionneurs de fluide par rapport à une première région, le premier ensemble de données de masque indiquant un premier nombre d'actionneurs de fluide d'un réseau (350) d'actionneurs de fluide activés pour un actionnement pour un événement d'actionnement respectif d'un premier ensemble d'événements d'actionnement ; et
la sélection d'un second ensemble (84) de données de masque permettant l'activation des actionneurs de fluide par rapport à une seconde région, le second ensemble de données de masque indiquant un second nombre d'actionneurs de fluide du réseau (350), différent du premier nombre, activés pour l'actionnement pour un événement d'actionnement respectif d'un second ensemble d'événements d'actionnement ; et
la transmission de la sélection du premier ensemble (82) de données de masque et la sélection du second ensemble (84) de données de masque au module logique d'actionnement (120) pour activer le premier nombre d'actionneurs de fluide pour l'événement d'actionnement respectif du premier ensemble d'événements d'actionnement et le second nombre d'actionneurs de fluide pour l'événement d'actionnement respectif du second ensemble d'événements d'actionnement, respectivement ;
le premier ensemble (82) de données de masque et le second ensemble (84) de données de masque étant sélectionnés sur la base d'un premier profil de puissance de la première région et d'un second profil de puissance de la seconde région, différent du premier profil de puissance, le premier profil de puissance et le second profil de puissance indiquant une quantité de puissance devant être consommée lors de l'éjection du fluide dans la première région et dans la seconde région, respectivement.

12. Procédé selon la revendication 11, la sélection du premier ensemble (82) de données de masque et la sélection du second ensemble (84) de données de masque étant basées sur une caractéristique d'actionnements de fluide par rapport à la première région et sur une caractéristique d'actionnements de fluide par rapport à la seconde région.

13. Support non transitoire lisible par ordinateur contenant des instructions permettant l'orientation d'un processeur vers :
la détermination d'une première caractéristique d'actionnement de fluide pour une première région ;
la détermination d'une seconde caractéristique de fluide pour une seconde région ;
la sélection d'un premier ensemble (82) de données de masque permettant l'activation des actionneurs de fluide par rapport à la première région sur la base de la première caractéristique d'actionnement de fluide déterminée, le premier ensemble de données de masque indiquant un premier nombre d'actionneurs de fluide d'un réseau (350) d'actionneurs de fluide activés pour un actionnement pour un événement d'actionnement respectif d'un premier ensemble d'événements d'actionnement ;
la sélection d'un second ensemble (84) de données de masque permettant l'activation des actionneurs de fluide par rapport à la seconde région sur la base de la première caractéristique d'actionnement de fluide déterminée, le second ensemble de données de masque indiquant un second nombre d'actionneurs de fluide d'un réseau (350), différent du premier nombre, activé pour l'actionnement pour un événement d'actionnement respectif d'un second ensemble d'événements d'actionnement ; et
la transmission de la sélection du premier ensemble (82) de données de masque et la sélection du second ensemble (84) de données de masque au module logique d'actionnement (120) pour activer le premier nombre d'actionneurs de fluide pour l'événement d'actionnement respectif du premier ensemble d'événements d'actionnement et le second nombre d'actionneurs de fluide pour l'événement d'actionnement respectif du second ensemble d'événements d'actionnement, respectivement ;
les instructions orientant le dispositif de commande (80, 380) pour sélectionner le premier ensemble (82) de données de masque et pour sélectionner le second ensemble (84) de données de masque sur la base d'un premier profil de puissance de la première région et d'un second profil de puissance de la seconde région, différent du premier profil de puissance, le premier profil de puissance et le second profil de puissance indiquant une quantité de puissance devant être consommée lors de l'éjection du fluide dans la première région et dans la seconde région, respectivement.

14. Support lisible par ordinateur selon la revendication 13, la première caractéristique d'actionnement de fluide et la seconde caractéristique d'actionnement de fluide comprenant une première densité d'actionnement d'actionneur de fluide et une seconde densité d'actionnement d'actionneur de fluide, respectivement.
